# EUROPEAN PATENT APPLICATION

(11) **EP 4 852 549 A1**
(43) Date of publication of application: **09.12.2026**
(21) Application number: 25751069.3
(22) Date of filing: 10.01.2025
(51) Int. Cl.: H04W 64/00

(54) **POSITIONING METHOD AND COMMUNICATION APPARATUS**

(30) Priority: 07.02.2024 CN 202410174300
(71) Applicant: HUAWEI TECHNOLOGIES CO., LTD., Shenzhen, Guangdong 518129 (CN)
(72) Inventor: WANG, Sihai, Shenzhen, Guangdong 518129 (CN); QIN, Cheng, Shenzhen, Guangdong 518129 (CN); YANG, Rui, Shenzhen, Guangdong 518129 (CN)
(74) Representative: Huawei European IPR
(86) International application number: PCT/CN2025/071845
(87) International publication number: WO 2025/167467

(57) **Abstract**

This application discloses a positioning method and a communication apparatus. The method relates to the field of communication technologies. The method includes: A network device determines first information corresponding to a first anchor; the network device sends the first information to a first terminal; and the first terminal obtains positioning information based on the first information. The first information includes one or more of the following information: first location information, first delay information, or first angle information. The first anchor is one of the following anchors: a first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer. The method helps improve terminal positioning accuracy.

## Description

This application claims priority to Chinese Patent Application No. 202410174300.5, filed with the China National Intellectual Property Administration on February 7, 2024 and entitled "POSITIONING METHOD AND COMMUNICATION APPARATUS", which is incorporated herein by reference in its entirety.

### TECHNICAL FIELD

This application relates to the field of communication technologies, and in particular, to a positioning method and a communication apparatus.

### BACKGROUND

Outdoor positioning may rely on global navigation satellite system (global navigation satellite system, GNSS). However, satellite signal attenuation caused by buildings prevents GNSS positioning from functioning indoors. In addition, due to complex indoor environments, indoor terminals further suffer from an issue of detecting a small quantity of stations. Although there are various technologies for performing positioning by using indoor radio signals, indoor wireless communication environments are generally complex, resulting in low positioning accuracy of existing indoor terminals.

### SUMMARY

Embodiments of this application provide a positioning method and a communication apparatus, to help improve positioning accuracy of a terminal device.

According to a first aspect, this application provides a positioning method. The method includes:
A network device determines first information that corresponds to at least one first anchor in a first anchor set, and the network device sends the first information of the at least one first anchor to a first terminal. The first information includes one or more of the following information: first location information, first delay information, or first angle information. The first location information is location information of the first anchor, the first delay information is delay information of the first anchor, and the first angle information is angle information of the first anchor. The first anchor set is related to a first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer.

Due to generally complex indoor wireless communication environments, characterized by sparse base stations, a non-line-of-sight NLOS environment, an unknown anchor location, an unknown delay of the remote radio head, an unknown direction of a directional anchor, and the like, an existing indoor terminal positioning algorithm cannot be implemented or is difficult to implement, or terminal positioning accuracy is insufficient after the positioning algorithm is implemented. The sparse base stations mean that a quantity of indoor access network devices (real physical devices) is small. In the existing indoor terminal positioning algorithm, only the real physical device is usually used as an anchor. However, in the present invention, the first anchor may be a real physical device or a real object, or may be a virtual device or a virtual object. In an indoor environment, one real physical access network device may usually correspond to a plurality of anchors, which equivalently increasing a quantity of anchors. For the NLOS environment, a non-line-of-sight path between the first terminal and a real physical device or a real object may be equivalent to a line-of-sight path between the first terminal and a virtual device or a virtual object corresponding to the real physical device or the real object, to convert the non-line-of-sight path (NLOS path) into the line-of-sight path (LOS path). For the issue of the unknown anchor location, the first information includes the location information of the first anchor, so that the first terminal can determine a location of the first anchor. For the issue of the unknown delay of the remote radio head, the first information includes a transmission delay corresponding to the first anchor, and the first anchor may be a remote radio head, so that the first terminal can determine a delay of the remote radio head. For the issue of the unknown direction of the directional anchor, the first information includes the angle information of the first anchor, and the first anchor may be a directional anchor, so that the first terminal can determine a direction of the directional anchor. Therefore, the method described in the first aspect helps improve positioning accuracy of the first terminal.

Optionally, the first delay information may be an absolute delay, or may be a relative delay.

Optionally, when the first anchor is a directional anchor, for example, an array antenna, information about a signal transmitting or receiving angle detected by the array antenna may be used for positioning, and the transmitting or receiving angle is usually an angle relative to a direction of the array antenna. The first angle information may be represented by an angle between a direction of the first anchor and a reference direction.

Optionally, the location of the first anchor remains unchanged in a terminal positioning process, or a change of the location of the first anchor has little impact on terminal positioning and may be ignored.

In a possible implementation, a specific implementation in which the network device determines the first information that corresponds to the at least one first anchor in the first anchor set is as follows: The network device determines, based on second information, the first information that corresponds to the at least one first anchor in the first anchor set. The second information includes first channel information and/or first multipath measurement information. The first channel information is information about a radio channel between a second terminal and the first access network device, and the first multipath measurement information is multipath measurement information of the radio channel between the second terminal and the first access network device. The second terminal is a terminal that accumulates data and assists the network device in determining the first information, and the first terminal is a terminal that performs positioning. The second terminal and the first terminal may be a same terminal, or may be different terminals.

In a possible implementation, before the network device determines, based on the second information, the first information that corresponds to the at least one first anchor in the first anchor set, the method further includes: The network device receives the first channel information and/or the first multipath measurement information from the second terminal.

In a possible implementation, the first multipath measurement information is multipath measurement information obtained by inputting the first channel information into a multipath measurement information extraction algorithm.

In a possible implementation, the method further includes: The network device sends information about the multipath measurement information extraction algorithm to the first terminal and/or the second terminal.

In a possible implementation, the second information further includes second location information and/or third location information that corresponds to the at least one first anchor. The second location information is location information of the second terminal, and the third location information is location information of the first anchor. The method may further include: The network device receives, from the second terminal, the second location information and/or the third location information that corresponds to the at least one first anchor.

In a possible implementation, the second information further includes internal sensor information of the second terminal.

In a possible implementation, the second information further includes corresponding time information for the second terminal to obtain the first channel information.

In a possible implementation, a specific implementation in which the network device determines, based on the second information, the first information that corresponds to the at least one first anchor in the first anchor set is as follows: The network device determines, by using a radio simultaneous localization and mapping SLAM algorithm based on the second information, the first information that corresponds to the at least one first anchor in the first anchor set. The radio signal-based SLAM (radio SLAM) algorithm has a capability of simultaneously performing positioning and mapping. To be specific, device positioning and map mapping can be simultaneously implemented through radio signal detection based on a relationship between a radio signal and the physical world (for example, a distance, time, and an angle). The SLAM algorithm may be an extended Kalman filter SLAM (extended Kalman filter SLAM, EKF-SLAM) algorithm, a particle filter SLAM (particle filter SLAM, PF-SLAM) algorithm, an artificial intelligence SLAM (Artificial Intelligence SLAM, AI-SLAM) (which may also be referred to as neural SLAM) algorithm, or another possible SLAM algorithm. In this process, the terminal may move, to obtain a sequence for radio signal detection.

In a possible implementation, the information about the radio channel includes one or more of the following information: a channel impulse response CIR, channel state information CSI, a power delay profile PDP, or a delay profile DP.

In a possible implementation, the first multipath measurement information includes a time difference of arrival TDOA of at least two of a plurality of paths of the radio channel between the second terminal and the first access network device and/or one or more of the following measurement information of at least one path of the radio channel between the second terminal and the first access network device: received signal strength RSS, a path loss path loss, time of arrival TOA, time of flight TOF, an angle of arrival AoA, an angle of departure AoD, round trip time RTT, phase information, or phase difference information.

The at least one path of the radio channel between the second terminal and the first access network device may be understood as a path between the second terminal and a first anchor related to the first access network device. The path is a line-of-sight path or an equivalent line-of-sight path. The equivalent line-of-sight path may be understood as a line-of-sight path between the second terminal and the first anchor that is converted from a non-line-of-sight path between the second terminal and the first access network device by introducing the first anchor related to the first access network device.

In a possible implementation, the the first delay information includes a signal transceiver circuit delay and/or a radio frequency transmission delay.

In a possible implementation, the first angle information includes azimuth information and/or downtilt information of a directional anchor.

In a possible implementation, the method further includes: The network device sends, to the first terminal, an identifier of at least one cell associated with the first access network device.

According to a second aspect, this application provides a positioning method. The method includes:

The first terminal receives first information that corresponds to at least one first anchor in a first anchor set. The first information includes one or more of the following information: first location information, first delay information, or first angle information. The first location information is location information of the first anchor, the first delay information is delay information of the first anchor, and the first angle information is angle information of the first anchor. The first anchor set is related to a first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer.

The first terminal obtains positioning information based on the first information that corresponds to the at least one first anchor in the first anchor set.

For beneficial effects corresponding to the second aspect, refer to the descriptions of the first aspect. Details are not described herein again.

Optionally, the first delay information may be an absolute delay, or may be a relative delay.

Optionally, when the first anchor is a directional anchor, for example, an array antenna, information about a signal transmitting or receiving angle detected by the array antenna may be used for positioning, and the transmitting or receiving angle is usually an angle relative to a direction of the array antenna. The first angle information may be represented by an angle between a direction of the first anchor and a reference direction.

Optionally, the location of the first anchor remains unchanged in a terminal positioning process, or a change of the location of the first anchor has little impact on terminal positioning and may be ignored.

In a possible implementation, a specific implementation of determining the positioning information based on the first information that corresponds to the at least one first anchor in the first anchor set is as follows: obtaining the positioning information based on the first information that corresponds to the at least one first anchor in the first anchor set and third information. The third information includes second channel information and/or second multipath measurement information. The second channel information is information about a radio channel between a first terminal and the first access network device, and the second multipath measurement information is multipath measurement information of the radio channel between the first terminal and the first access network device.

In a possible implementation, the second multipath measurement information is multipath measurement information obtained by inputting the second channel information into a multipath measurement information extraction algorithm.

In a possible implementation, the method further includes: The first terminal receives information about the multipath measurement information extraction algorithm.

In a possible implementation, the third information further includes internal sensor information of the first terminal.

In a possible implementation, the information about the radio channel includes one or more of the following information: a channel impulse response CIR, channel state information CSI, a power delay profile PDP, or a delay profile DP.

In a possible implementation, the second multipath measurement information includes a time difference of arrival TDOA of at least two of a plurality of paths of the radio channel between the first terminal and the first access network device and/or one or more of the following measurement information of at least one path of the radio channel between the first terminal and the first access network device: received signal strength RSS, a path loss path loss, time of arrival TOA, time of flight TOF, an angle of arrival AoA, an angle of departure AoD, round trip time RTT, phase information, or phase difference information.

The at least one path of the radio channel between the first terminal and the first access network device may be understood as a path between the first terminal and a first anchor related to the first access network device. The path is a line-of-sight path or an equivalent line-of-sight path. The equivalent line-of-sight path may be understood as a line-of-sight path between the first terminal and the first anchor that is converted from a non-line-of-sight path between the first terminal and the first access network device by introducing the first anchor related to the first access network device.

In a possible implementation, the first delay information includes a signal transceiver circuit delay and/or a radio frequency transmission delay.

In a possible implementation, the first angle information includes azimuth information and/or downtilt information of a directional anchor.

In a possible implementation, the method further includes: The first terminal receives, from the network device, an identifier of at least one cell associated with the first access network device.

According to a third aspect, this application provides a positioning method. The method includes: A network device determines a first positioning algorithm, where the first positioning algorithm is used for terminal positioning; and the network device sends information about the first positioning algorithm to a first terminal.

Based on the method described in the third aspect, positioning is performed by using the first positioning algorithm obtained by the network device through training, which helps improve positioning accuracy of the first terminal.

In a possible implementation, the method further includes: The network device determines, by using a radio SLAM algorithm, first information that corresponds to at least one first anchor in a first anchor set; and the network device sends, to the first terminal, the first information that corresponds to the at least one first anchor in the first anchor set. The first information includes one or more of the following information: first location information, first delay information, or first angle information. The first location information is location information of the first anchor, the first delay information is delay information of the first anchor, and the first angle information is angle information of the first anchor. The first anchor set is related to a first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer.

Optionally, the first delay information may be an absolute delay, or may be a relative delay.

Optionally, when the first anchor is a directional anchor, for example, an array antenna, information about a signal transmitting or receiving angle detected by the array antenna may be used for positioning, and the transmitting or receiving angle is usually an angle relative to a direction of the array antenna. The first angle information may be represented by an angle between a direction of the first anchor and a reference direction.

Optionally, the location of the first anchor remains unchanged in a terminal positioning process, or a change of the location of the first anchor has little impact on terminal positioning and may be ignored.

In a possible implementation, the information about the first positioning algorithm further includes first information corresponding to at least one first anchor that is related to a cell to which the first positioning algorithm is applicable.

In a possible implementation, a specific implementation in which the network device determines the first positioning algorithm is as follows: The network device determines the first positioning algorithm by using a radio SLAM algorithm based on second information. The second information includes first channel information and/or first multipath measurement information. The first channel information is information about a radio channel between a second terminal and the first anchor, and the first multipath measurement information is multipath measurement information of a radio channel between the second terminal and the first access network device.

In a possible implementation, before the network device determines the first positioning algorithm based on the second information, the method further includes: The network device receives the first channel information and/or the first multipath measurement information from the second terminal.

In a possible implementation, the first multipath measurement information is multipath measurement information obtained by inputting the first channel information into a multipath measurement information extraction algorithm.

In a possible implementation, the method further includes: The network device sends information about the multipath measurement information extraction algorithm to the first terminal and/or the second terminal.

In a possible implementation, the second information further includes second location information and/or third location information that corresponds to the at least one first anchor. The second location information is location information of the second terminal, and the third location information is location information of the first anchor.

In a possible implementation, the second information further includes internal sensor information of the second terminal.

In a possible implementation, the second information further includes corresponding time information for the second terminal to obtain the first channel information.

In a possible implementation, the information about the radio channel includes one or more of the following information: a channel impulse response CIR, channel state information CSI, a power delay profile PDP, or a delay profile DP.

In a possible implementation, the first multipath measurement information includes a time difference of arrival TDOA of at least two of a plurality of paths of the radio channel between the second terminal and the first access network device and/or one or more of the following measurement information of at least one path of the radio channel between the second terminal and the first access network device: received signal strength RSS, a path loss path loss, time of arrival TOA, time of flight TOF, an angle of arrival AoA, an angle of departure AoD, round trip time RTT, phase information, or phase difference information.

The at least one path of the radio channel between the second terminal and the first access network device may be understood as a path between the second terminal and a first anchor related to the first access network device. The path is a line-of-sight path or an equivalent line-of-sight path. The equivalent line-of-sight path may be understood as a line-of-sight path between the second terminal and the first anchor that is converted from a non-line-of-sight path between the second terminal and the first access network device by introducing the first anchor related to the first access network device.

In a possible implementation, the first delay information includes a signal transceiver circuit delay and/or a radio frequency transmission delay.

In a possible implementation, the first angle information includes azimuth information and/or downtilt information of a directional anchor.

In a possible implementation, the method further includes: The network device sends, to the first terminal, an identifier of at least one cell associated with the first access network device.

According to a fourth aspect, this application provides a positioning method. The method includes: A first terminal receives information about a first positioning algorithm; and the first terminal obtains positioning information by using the first positioning algorithm.

In a possible implementation, the first terminal receives first information that corresponds to at least one first anchor in a first anchor set. The first information includes one or more of the following information: first location information, first delay information, or first angle information. The anchor is a reference point used to anchor a terminal device location. The first location information is location information of the first anchor, the first delay information is delay information of the first anchor, and the first angle information is angle information of the first anchor. The first anchor set is related to a first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer. A specific implementation in which the first terminal determines the positioning information by using the first positioning algorithm is as follows: The first terminal obtains the positioning information by using the first positioning algorithm based on the first information that corresponds to the at least one first anchor.

Optionally, the first delay information may be an absolute delay, or may be a relative delay.

Optionally, when the first anchor is a directional anchor, for example, an array antenna, information about a signal transmitting or receiving angle detected by the array antenna may be used for positioning, and the transmitting or receiving angle is usually an angle relative to a direction of the array antenna. The first angle information may be represented by an angle between a direction of the first anchor and a reference direction.

Optionally, the location of the first anchor remains unchanged in a terminal positioning process, or a change of the location of the first anchor has little impact on terminal positioning and may be ignored.

In a possible implementation, the information about the first positioning algorithm further includes first information corresponding to at least one first anchor that is related to a cell to which the first positioning algorithm is applicable.

In a possible implementation, a specific implementation in which the first terminal determines the positioning information by using the first positioning algorithm is as follows: The first terminal obtains the positioning information by using the first positioning algorithm based on the third information. The third information includes second channel information and/or second multipath measurement information. The second channel information is information about a radio channel between the first terminal and the first access network device, and the second multipath measurement information is multipath measurement information of the radio channel between the first terminal and the first access network device.

In a possible implementation, the second multipath measurement information is multipath measurement information obtained by inputting the second channel information into a multipath measurement information extraction algorithm.

In a possible implementation, the method further includes: The first terminal receives information about the multipath measurement information extraction algorithm.

In a possible implementation, the third information further includes internal sensor information of the first terminal.

In a possible implementation, the information about the radio channel includes one or more of the following information: a channel impulse response CIR, channel state information CSI, a power delay profile PDP, or a delay profile DP.

In a possible implementation, the second multipath measurement information includes a time difference of arrival TDOA of at least two of a plurality of paths of the radio channel between the first terminal and the first access network device and/or one or more of the following measurement information of at least one path of the radio channel between the first terminal and the first access network device: received signal strength RSS, a path loss path loss, time of arrival TOA, time of flight TOF, an angle of arrival AoA, an angle of departure AoD, round trip time RTT, phase information, or phase difference information.

The at least one path of the radio channel between the first terminal and the first access network device may be understood as a path between the first terminal and a first anchor related to the first access network device. The path is a line-of-sight path is an equivalent line-of-sight path. The equivalent line-of-sight path may be understood as a line-of-sight path between the first terminal and the first anchor that is converted from a non-line-of-sight path between the first terminal and the first access network device by introducing the first anchor related to the first access network device.

In a possible implementation, the first delay information includes a signal transceiver circuit delay and/or a radio frequency transmission delay.

In a possible implementation, the first angle information includes azimuth information and/or downtilt information of a directional anchor.

In a possible implementation, the method further includes: The first terminal receives, from the network device, an identifier of at least one cell associated with the first access network device.

According to a fifth aspect, this application provides a positioning method. The method includes: A network device determines first information that corresponds to at least one first anchor in a first anchor set and/or a first positioning algorithm. The first information includes one or more of the following information: first location information, first delay information, or first angle information. The anchor is a reference point used to anchor a terminal device location. The first anchor set is related to a first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer. The method further includes: The network device obtains positioning information of a first terminal based on the first information that corresponds to the at least one first anchor and/or by using the first positioning algorithm; and the network device sends the positioning information to the first terminal.

Optionally, the first delay information may be an absolute delay, or may be a relative delay.

Optionally, when the first anchor is a directional anchor, for example, an array antenna, information about a signal transmitting or receiving angle detected by the array antenna may be used for positioning, and the transmitting or receiving angle is usually an angle relative to a direction of the array antenna. The first angle information may be represented by an angle between a direction of the first anchor and a reference direction.

In a possible implementation, a specific implementation in which the network device determines the first information that corresponds to the at least one first anchor in the first anchor set and/or the first positioning algorithm is as follows: The network device determines, based on second information, the first information that corresponds to the at least one first anchor in the first anchor set and/or the first positioning algorithm. The second information includes first channel information and/or first multipath measurement information. The first channel information is information about a radio channel between a second terminal and the first access network device, and the first multipath measurement information is multipath measurement information of the radio channel between the second terminal and the first access network device.

In a possible implementation, before the network device determines the first information and/or the first positioning algorithm based on the second information, the method further includes: receiving the first channel information and/or the first multipath measurement information from the second terminal.

In a possible implementation, the first multipath measurement information is multipath measurement information obtained by inputting the first channel information into a multipath measurement information extraction algorithm.

In a possible implementation, the method further includes: The network device sends information about the multipath measurement information extraction algorithm to the first terminal and/or the second terminal.

In a possible implementation, the second information further includes second location information and/or third location information that corresponds to the at least one first anchor. The second location information is location information of the second terminal, and the third location information is location information of the first anchor. The method further includes: The network device receives, from the second terminal, the second location information and/or the third location information that corresponds to the at least one first anchor.

In a possible implementation, the second information further includes internal sensor information of the second terminal.

In a possible implementation, the second information further includes corresponding time information for the second terminal to obtain the first channel information.

In a possible implementation, a specific implementation in which the network device obtains the positioning information of the first terminal based on the first information that corresponds to the the at least one first anchor and/or by using the first positioning algorithm is as follows: The network device obtains the positioning information based on third information and the first information that corresponds to the the at least one first anchor and/or by using the first positioning algorithm. The third information includes second channel information and/or second multipath measurement information. The second channel information is information about a radio channel between the first terminal and the first access network device, and the second multipath measurement information is multipath measurement information of the radio channel between the first terminal and the first access network device.

In a possible implementation, before the network device obtains the positioning information of the first terminal based on the first information that corresponds to the the at least one first anchor and/or by using the first positioning algorithm, the method further includes: The network device receives the second channel information and/or the second multipath measurement information from the first terminal.

In a possible implementation, the third information further includes internal sensor information of the first terminal. The method further includes: The network device receives the internal sensor information from the first terminal.

In a possible implementation, the information about the radio channel includes one or more of the following information: a channel impulse response CIR, channel state information CSI, a power delay profile PDP, or a delay profile DP.

In a possible implementation, the first multipath measurement information includes a time difference of arrival TDOA of at least two of a plurality of paths of the radio channel between the second terminal and the first access network device and/or one or more of the following measurement information of at least one path of the radio channel between the second terminal and the first access network device: received signal strength RSS, a path loss path loss, time of arrival TOA, time of flight TOF, an angle of arrival AoA, an angle of departure AoD, round trip time RTT, phase information, or phase difference information.

The at least one path of the radio channel between the second terminal and the first access network device may be understood as a path between the second terminal and a first anchor related to the first access network device. The path is a line-of-sight path or an equivalent line-of-sight path. The equivalent line-of-sight path may be understood as a line-of-sight path between the second terminal and the first anchor that is converted from a non-line-of-sight path between the second terminal and the first access network device by introducing the first anchor related to the first access network device.

In a possible implementation, the second multipath measurement information includes a time difference of arrival TDOA of at least two of a plurality of paths of the radio channel between the first terminal and the first access network device and/or one or more of the following measurement information of at least one path of the radio channel between the first terminal and the first access network device: received signal strength RSS, a path loss path loss, time of arrival TOA, time of flight TOF, an angle of arrival AoA, an angle of departure AoD, round trip time RTT, phase information, or phase difference information.

The at least one path of the radio channel between the first terminal and the first access network device may be understood as a path between the first terminal and a first anchor related to the first access network device. The path is a line-of-sight path or an equivalent line-of-sight path. The equivalent line-of-sight path may be understood as a line-of-sight path between the first terminal and the first anchor that is converted from a non-line-of-sight path between the first terminal and the first access network device by introducing the first anchor related to the first access network device.

In a possible implementation, the first delay information includes a signal transceiver circuit delay and/or a radio frequency transmission delay.

In a possible implementation, the first angle information includes azimuth information and/or downtilt information of a directional anchor.

According to a sixth aspect, this application provides a communication apparatus. The communication apparatus may alternatively be a chip system. The communication apparatus may perform the method according to the first aspect, the third aspect, or the fifth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect thereof, refer to the method according to the first aspect, the third aspect, or the fifth aspect and the beneficial effect thereof. Repeated content is not described again.

According to a seventh aspect, this application provides a communication apparatus. The communication apparatus may alternatively be a chip system. The communication apparatus may perform the method according to the second aspect or the fourth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect thereof, refer to the methods according to the second aspect or the fourth aspect, and beneficial effect thereof. Repeated content is not described again.

According to an eighth aspect, this application provides a communication apparatus. The communication apparatus includes a processor. When the processor invokes a computer program in a memory, the method according to any one of the first aspect to the fifth aspect and the possible implementations of the first aspect to the fifth aspect are performed.

In a possible implementation, the communication apparatus further includes the memory. The memory and the processor are coupled to each other. Optionally, the memory and the processor are integrated together.

In a possible implementation, the communication apparatus further includes a transceiver. The transceiver is configured to send or receive data and/or signaling.

According to a ninth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect to the fifth aspect and the possible implementations of the first aspect to the fifth aspect through a logic circuit or by executing code instructions.

According to a tenth aspect, this application provides a computer-readable storage medium. The storage medium stores a computer program or instructions. When the computer program or the instructions are executed by a communication apparatus, the method according to any one of the first aspect to the fifth aspect and the possible implementations of the first aspect to the fifth aspect are implemented.

According to an eleventh aspect, an embodiment of this application provides a computer program or a computer program product, including code or instructions. When the code or the instructions are run on a computer, the computer is enabled to perform the method according to any one of the first aspect to the fifth aspect and the possible implementations of the first aspect to the fifth aspect.

According to a twelfth aspect, an embodiment of this application provides a communication system. The communication system includes the communication apparatus, according to the sixth aspect, configured to perform the method and the communication apparatus, according to the seventh aspect, configured to perform the method.

According to a thirteenth aspect, this application provides a chip. The chip includes a processor and a communication interface. The processor is configured to enable the chip to perform the method according to any one of the first aspect, the third aspect, the fifth aspect, or any possible implementation of the first aspect, the third aspect, or the fifth aspect, or the processor is configured to enable the chip to perform the method according to the second aspect, the fourth aspect, or any possible implementation of the second aspect or the fourth aspect.

### BRIEF DESCRIPTION OF DRAWINGS

FIG. 1 is a diagram of a communication system according to an embodiment of this application;
FIG. 2 is a diagram of a network architecture according to an embodiment of this application;
FIG. 3 is a diagram of a multipath scenario according to an embodiment of this application;
FIG. 4 is a schematic flowchart of a positioning method according to an embodiment of this application;
FIG. 5 is a diagram of a remote radio head according to an embodiment of this application;
FIG. 6 is a diagram of a virtual anchor according to an embodiment of this application;
FIG. 7 is a schematic flowchart of another positioning method according to an embodiment of this application;
FIG. 8 is a schematic flowchart of another positioning method according to an embodiment of this application;
FIG. 9 is a diagram of a structure of a communication apparatus according to an embodiment of this application;
FIG. 10 is a diagram of a structure of another communication apparatus according to an embodiment of this application; and
FIG. 11 is a diagram of a structure of a chip according to an embodiment of this application.

### DESCRIPTION OF EMBODIMENTS

The following further describes specific embodiments of this application in detail with reference to accompanying drawings.

Terms "first", "second", and the like in the specification, claims, and accompanying drawings of this application are used to distinguish between different objects, and are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in this specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

The following describes a system architecture in embodiments of this application.

To facilitate understanding of technical solutions in embodiments of this application, the following briefly describes a system architecture of a method provided in embodiments of this application. It may be understood that the system architecture described in embodiments of this application is intended to describe the technical solutions in embodiments of this application more clearly, and does not constitute a limitation on the technical solutions provided in embodiments of this application.

The technical solutions in embodiments of this application may be applied to various communication systems such as a satellite communication system and a conventional mobile communication system. The satellite communication system may be integrated with the conventional mobile communication system (that is, a terrestrial communication system). The communication systems are, for example, wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, and another future communication system such as a 6th generation (6th generation, 6G) system. The communication systems further support a communication system that integrates a plurality of wireless technologies, for example, may be applied to a system that integrates a terrestrial mobile communication network with a non-terrestrial network (non-terrestrial network, NTN), such as an uncrewed aerial vehicle, a satellite communication system, or a high-altitude platform station (high-altitude platform station, HAPS) communication system.

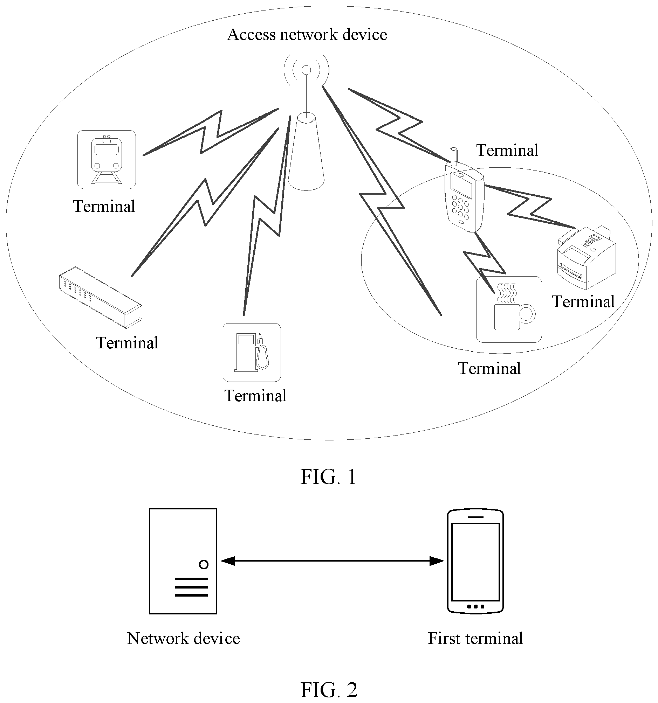

FIG. 1 shows an example of a communication system applicable to an embodiment of this application. The communication system includes at least one access network device and at least one terminal. In FIG. 1, a plurality of access network devices and a plurality of terminals are used as an example. The plurality of terminals may be a cellular phone, a smartphone, a portable computer, a handheld communication device, a handheld compute device, a satellite radio apparatus, a global positioning system, a personal digital assistant (personal digital assistant, PDA), and/or any other suitable device configured to perform communication in a wireless communication system. All of the terminals may be connected to the access network device. All of the plurality of terminals can communicate with the access network device. In addition, the terminals may communicate with each other. Certainly, a quantity of terminals and a quantity of access network devices in FIG. 1 are merely an example, and there may alternatively be more or fewer terminals and more or fewer access network devices.

The terminal in embodiments of this application is an entity configured to receive or transmit a signal on a user side. The terminal is a device that provides voice and/or data connectivity for a user, for example, a handheld device or a vehicle-mounted device having a wireless connection function. The terminal may alternatively be another processing device connected to a wireless modem. The terminal may communicate with a radio access network (radio access network, RAN). The terminal may also be referred to as a wireless terminal, a subscriber unit (subscriber unit), a subscriber station (subscriber station), a mobile station (mobile station), a mobile (mobile) console, a remote station (remote station), an access point (access point), a remote terminal (remote terminal), an access terminal (access terminal), a user terminal (user terminal), a user agent (user agent), a user device (user device), UE, or the like. The terminal may be a mobile terminal, for example, a mobile phone (also referred to as a "cellular" phone), and a computer having the mobile terminal, for example, may be a portable, pocket-sized, handheld, computer built-in, or vehicle-mounted mobile apparatus, which exchanges voice and/or data with a radio access network. For example, the terminal may alternatively be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). For example, common terminals include a mobile phone, a tablet computer, a notebook computer, a palmtop computer, a mobile internet device (mobile internet device, MID), and a wearable device such as a smartwatch, a smart band, or a pedometer. However, embodiments of this application are not limited thereto.

A device form of the terminal is not limited in embodiments of this application. An apparatus for implementing a function of the terminal may be a terminal, or may be an apparatus that can support the terminal in implementing the function, for example, a chip system. The apparatus may be mounted in the terminal or used in cooperation with the terminal. In this embodiment of this application, the chip system may include a chip, or may include a chip and another discrete device.

The access network device is a network-side entity that is configured to send a signal, receive a signal, or send a signal and receive a signal. The access network device may be an apparatus deployed in a radio access network (radio access network, RAN) to provide a wireless communication function for the terminal. The access network device may communicate and interact with a core network device, to provide a communication service for the terminal.

In a possible scenario, the access network device may be a device having a function of a base station, for example, an evolved NodeB (evolved NodeB, eNodeB), a transmission reception point (transmitting and receiving point, TRP), a transmission point (transmitting point, TP), a next-generation NodeB (next-generation NodeB, gNB), a next-generation base station in a 6G mobile communication system, an integrated access and backhaul (integrated access and backhaul, IAB) node, or a non-terrestrial network device, that is, a device or a satellite that may be deployed on a high-altitude platform station. The access network device may be a transmission reception point (transmission reception point, TRP), a base station, or a control node in various forms, for example, a network controller or a wireless controller. Specifically, the access network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU) and a remote radio unit (remote radio unit, RRU) in a distributed base station scenario, a transmission reception point (transmission reception point, TRP), a transmission point (transmitting point, TP), a mobile switching center, or the like, or may be an antenna panel of a base station. The control node may be connected to a plurality of base stations, and configure resources for a plurality of terminals covered by the plurality of base stations. In systems using different radio access technologies, names of devices having functions of the base station may vary. For example, the access network device may be a gNB in 5G, a network side device in a network after 5G, an access network device in a future evolved public land mobile (communication) network (public land mobile network, PLMN), or a device that undertakes a base station function in device-to-device (device-to-device, D2D) communication, machine-to-machine (machine-to-machine, M2M) communication, or internet of vehicles communication. A specific name of the access network device is not limited in this application. The access network device may alternatively be a baseband unit pool (BBU pool), an RRU, or the like in an open access network (open RAN, O-RAN or ORAN) or a cloud radio access network (cloud radio access network, CRAN).

In another possible scenario, a plurality of access network devices cooperate to assist the terminal in implementing radio access, and different access network devices respectively implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified into an access network device in an access network RAN, or the CU may be classified into an access network device in a core network (core network, CN). This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the access network device is not limited. An apparatus configured to implement a function of the access network device may be an access network device, or may be an apparatus that can support the access network device in implementing the function, for example, a chip system. The apparatus may be mounted in the access network device or used in cooperation with the access network device.

FIG. 2 shows a network architecture to which a positioning method is applicable according to an embodiment of this application. The network architecture includes at least one network device and at least one first terminal. In FIG. 2, one network device and one first terminal are used as an example. The first terminal may be a terminal that is correspondingly described in the communication system shown in FIG. 1. The network device is a device that assists the first terminal in positioning, and the network device may be a server. The server may be an independent physical server, may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), and a big data and artificial intelligence platform. The network device may be a server, or may be another device such as an access network device or a core network device. This is not limited in embodiments of this application.

The following explains technical terms in embodiments of this application.

An anchor (anchor) is a reference point used to anchor a terminal location, or may be understood as a reference point for terminal positioning. There may be two types of anchors: a real anchor and a virtual anchor. It may be understood that the real anchor is a real device or a real object that physically exists, for example, an access network device, an antenna of the access network device, a remote radio head of the access network device, or a scatterer. The virtual anchor may also be referred to as a mirror anchor. The virtual anchor is a mirror image of the real anchor, and may be obtained through one time of mirroring or a plurality of times of mirroring. For example, the virtual anchor may be a mirror image of the access network device, a mirror image of the antenna of the access network device, a mirror image of the remote radio head of the access network device, a mirror image of the scatterer, or the like. Certainly, in an actual environment, in addition to the anchors described above, there may be another type of anchor. For example, another component of the access network device or a mirror image of the another component may be considered as an anchor. This is not limited in embodiments of this application.

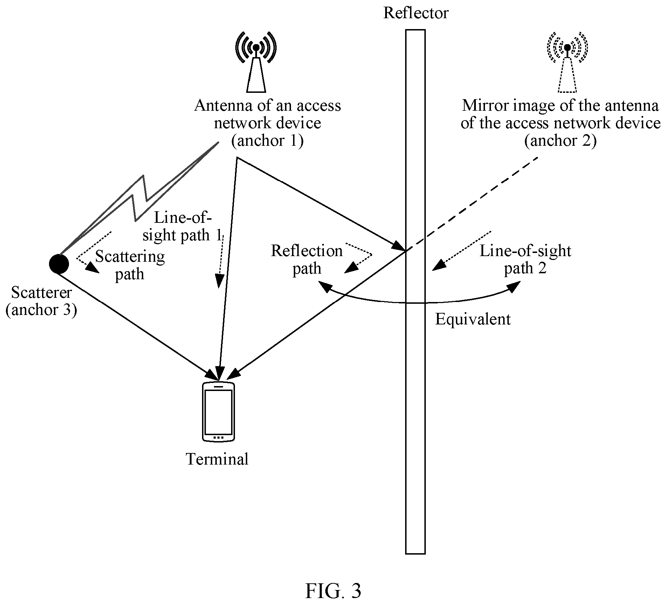

For example, as shown in FIG. 3, in a multipath scenario, a signal transmitted by the antenna of the access network device may be directly transmitted to a terminal via a line-of-sight path 1. In addition, the signal may alternatively be reflected by a reflector (for example, a wall) and then transmitted to the terminal, as shown by a reflection path in FIG. 3. In this case, the signal may be equivalently regarded as a signal, with respect to a mirror image of the reflector, from the antenna of the access network device, and the reflection path may be equivalent to a line-of-sight path 2 between the terminal and the mirror image of the antenna of the access network device. The signal may alternatively be scattered by the scatterer and then transmitted to the terminal, as shown by a scattering path in FIG. 3. In this case, the signal may be equivalently regarded as a signal from the scatterer, but has an extra signal transmission delay (transmission time from the antenna of the access network device to the scatterer). Although there is only a single station (one access network device) in FIG. 3, due to a multipath effect, the terminal equivalently receives, via three paths, line-of-sight path signals that are respectively from the antenna of the access network device, the mirror image of the antenna of the access network device, and the scatterer.

Therefore, the antenna of the access network device, the mirror image of the antenna of the access network device, and the scatterer may all be used as anchors to anchor the terminal location. A possible implementation method is as follows: The terminal learns of location information of the three anchors (an anchor 1, an anchor 2, and an anchor 3) and information about signal transmission delays (equivalent to distances) from the three anchors to the terminal, and may obtain location information of the terminal by using a three-point positioning method.

Outdoor positioning may rely on global navigation satellite system (global navigation satellite system, GNSS). However, satellite signal attenuation caused by buildings prevents GNSS positioning from functioning indoors. In addition, due to complex indoor environments, indoor terminals further suffer from an issue of detecting a small quantity of stations. Although there are various technologies for performing positioning by using indoor radio signals, indoor wireless communication environments are generally complex, resulting in low positioning accuracy of existing indoor terminals.

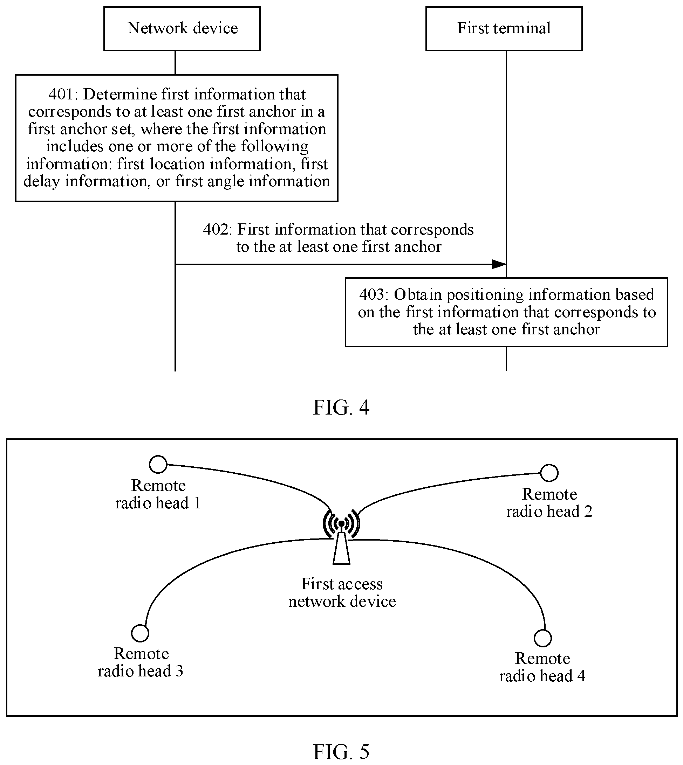

To improve terminal positioning accuracy, with reference to the network architecture in FIG. 2, an embodiment of this application provides a positioning method. As shown in FIG. 4, the positioning method includes step 401 to step 403. The method shown in FIG. 4 is performed by a network device and a first terminal, or the method shown in FIG. 4 may be performed by a chip in the network device and a chip in the first terminal. FIG. 4 is described by using the network device and the first terminal as an example. Execution bodies of the positioning method are not limited in embodiments of this application.

401: The network device determines first information that corresponds to at least one first anchor in a first anchor set, where the first information includes one or more of the following information: first location information, first delay information, or first angle information.

In this embodiment of this application, the first anchor is a reference point used to anchor a terminal location, and the first anchor set is related to a first access network device. It may be further understood that each first anchor in the first anchor set is related to the first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer. It should be noted that the first anchor may alternatively be a component of the first access network device other than the antenna or a mirror image of the component. Certainly, the first anchor may alternatively be another type of anchor. It may be understood that when there are two or more first anchors in the first anchor set, different first anchors may be anchors of a same type, or may be anchors of different types. For example, the first anchor set includes a first anchor 1 and a first anchor 2. The first anchor 1 may be the mirror image of the antenna of the first access network device, and the first anchor 2 may be the remote radio head of the first access network device. Alternatively, the first anchor 1 and the first anchor 2 are two remote radio heads of the first access network device.

The following describes the anchor types of the first anchors described above.
(1) The first access network device, the antenna of the first access network device, the remote radio head of the first access network device, and the radio signal scatterer in the radio signal propagation process of the first access network device each may be understood as a device or an object that has a function of transmitting, receiving, scattering, transferring, relaying, or performing power amplification on a radio signal, may be a real physical device or a real object, and may be referred to as a real anchor.
   The remote radio head of the first access network device may include a radio frequency function and/or an antenna function. The first access network device may also be referred to as a signal source of the remote radio head. The remote radio head and the first access network device may be at different geographical locations, to improve coverage of the first access network device. The remote radio head may also be referred to as a remote radio unit. As shown in FIG. 5, the first access network device is connected to four remote radio heads (a remote radio head 1, a remote radio head 2, a remote radio head 3, and a remote radio head 4). The first anchor and the four remote radio heads are respectively at different locations, to improve network coverage.
   The scatterer described above may be an object (for example, a particle or a rough surface) that a signal may encounter and that causes the signal to be scattered during signal transmission between the first access network device and a terminal. The object sends the signal to a receive end through scattering, and the object may be referred to as a radio signal scatterer in the radio signal propagation process of the first access network device.
(2) The mirror image of the first access network device, the mirror image of the antenna of the first access network device, the mirror image of the remote radio head of the first access network device, and the mirror image of the radio signal scatterer in the radio signal propagation process of the first access network device each may be understood as a virtual device or a virtual object, and may be referred to as a virtual anchor.

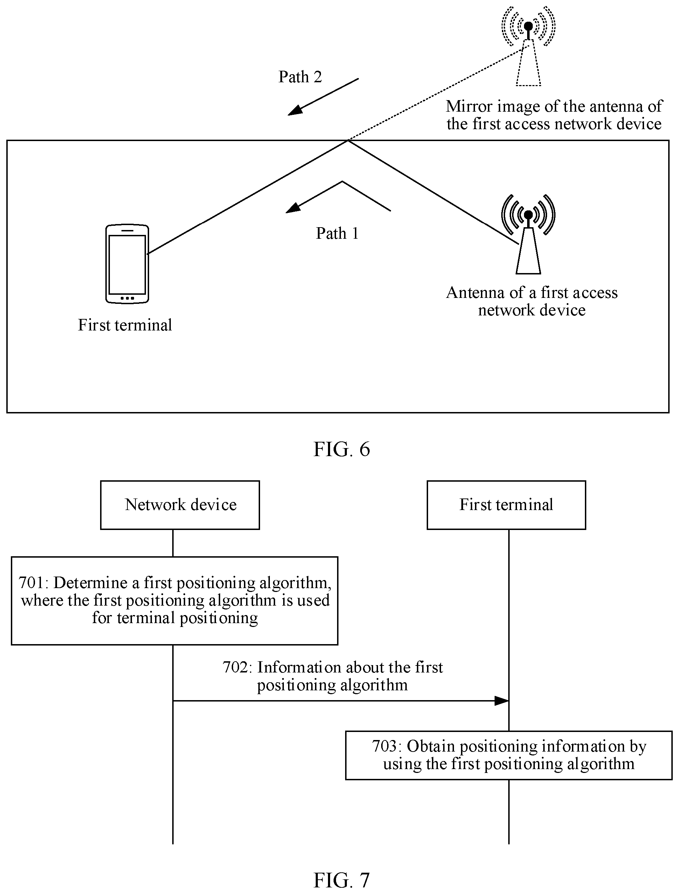

The mirror image of the antenna of the first access network device is used as an example. In an environment in which the first access network device and the terminal are located, some radio signal reflectors (for example, walls) may form signal reflection, and signal refraction may further exist. Therefore, a transmission path between the terminal and the first anchor is not necessarily a straight line. A non-straight path between the terminal and the antenna of the first access network device may be equivalent to a straight path between the terminal and the mirror image of the antenna of the first access network device. The mirror image of the antenna of the first access network device may be considered as an anchor having a line-of-sight path (an equivalent line-of-sight path) with the terminal. As shown in FIG. 6, the first terminal is located indoors, and the antenna of the first access network device sends a signal to the first terminal via a path 1, which may be equivalent to that the mirror image of the antenna of the first access network device sends the signal to the first terminal via a path 2.

The following describes the first location information, the first delay information, or the first angle information described above.
(1) The first location information is location information of the first anchor. Optionally, the location information includes absolute location information and/or relative location information. Further, optionally, the absolute location information is coordinates of a specific location (a physical location of a real anchor or a virtual physical location of a virtual anchor) of the first anchor. The relative location information is coordinates of a location of the first anchor relative to a target location. The target location may be any location, for example, may be a location of the first access network device. The location of the first anchor remains unchanged in a terminal positioning process, or a change of the location has little impact on terminal positioning and may be ignored. It should be additionally noted that the first location information is location information determined by the network device, and may also be referred to as high-accuracy location information of the first anchor.
(2) The first delay information is delay information of the first anchor. Optionally, the the first delay information includes a signal transceiver circuit delay and/or a radio frequency transmission delay. The signal transceiver circuit delay may be understood as including a delay, during signal sending, from generation of a baseband signal to conversion of the baseband signal into a radio frequency signal, or a delay, during signal receiving, from start of conversion of a radio frequency signal into a baseband signal to processing of the baseband signal. The radio frequency transmission delay is a signal transmission delay between the anchor and a point at which a radio frequency signal is generated/processed. For example, in FIG. 3, radio frequency transmission delays of the anchor 1, the anchor 2, and the anchor 3 may respectively be signal transmission delays between the point at which the radio frequency signal is generated and the anchor 1, the anchor 2, and the anchor 3. For example, a virtual anchor is a mirror image of a real anchor that corresponds to the virtual anchor. Therefore, first delay information of the real anchor is equal to first delay information of the virtual anchor that corresponds to the real anchor. For example, first delay information of the anchor 1 is equal to first delay information of the anchor 2. The first delay information may be an absolute delay, or may be a relative delay. The relative delay is the first delay information being subtracted from or added to a piece of reference delay information. For example, signal sending is used as an example. Anchors related to a same access network device may have a same signal sending circuit delay, and a same delay between generation of a radio frequency signal and sending of the radio frequency signal via the antenna. In this case, the first delay information may be a delay between the anchor and a point at which the radio frequency signal is sent via the antenna. For the anchor 1 and the anchor 2, the first delay information is 0. For the anchor 3, the first delay information is a signal transmission delay between the anchor 1 and the anchor 3. It may be understood that the delay information may be a delay in a signal sending or receiving process. It may be further understood that there may be other delay division methods and/or representation methods, which do not affect execution of this embodiment of this application. This is not limited in embodiments of this application.
(3) The first angle information is angle information of the first anchor. When the first anchor is a directional anchor, for example, an array antenna, information about a signal transmitting or receiving angle detected by the array antenna may be used for positioning, and the transmitting or receiving angle is usually an angle relative to a direction of the array antenna. The first angle information may be represented by an angle between the direction of the array antenna (first anchor) and a reference direction. Optionally, the first angle information may include azimuth information and/or downtilt information. In a possible implementation, an azimuth is an included angle formed through horizontal clockwise rotation from a reference direction (for example, a due north direction) to a main lobe direction of the antenna. The downtilt is an included angle between the main lobe direction of the antenna and the reference direction (for example, a horizontal plane).

In a possible implementation, the network device determines, by using a radio simultaneous localization and mapping (simultaneous localization and mapping, SLAM) algorithm, the first information that corresponds to the at least one first anchor in the first anchor set. The radio signal-based SLAM (radio SLAM) algorithm has a capability of simultaneously performing positioning and mapping. To be specific, device positioning and map mapping can be simultaneously implemented through radio signal detection based on a relationship between a radio signal and the physical world (for example, a distance, time, and an angle). It should be noted that the map is a map related to radio signal distribution, instead of a map in a geographical sense. For example, spatial distribution information of the radio signal may be obtained based on the first location information, the first delay information, or the first angle information of the anchor with reference to known radio signal information and/or propagation characteristics. Therefore, "map mapping" may be understood as determining the first location information, the first delay information, or the first angle information of the anchor. In this process, the terminal may move, to obtain a sequence for radio signal detection.

The SLAM algorithm may be an extended Kalman filter SLAM (extended Kalman filter SLAM, EKF-SLAM) algorithm, a particle filter SLAM (particle filter SLAM, PF-SLAM) algorithm, an artificial intelligence SLAM (Artificial intelligence SLAM, AI-SLAM) (which may also be referred to as neural SLAM) algorithm, or another possible SLAM algorithm. This is not limited in embodiments of this application.

In a possible implementation, a specific implementation in which the network device determines the first information that corresponds to the at least one first anchor in the first anchor set is as follows: The network device determines, based on second information, the first information that corresponds to the at least one first anchor in the first anchor set. The second information includes first channel information and/or first multipath measurement information. The first channel information is information about a radio channel between a second terminal and the first access network device, and the first multipath measurement information is multipath measurement information of the radio channel between the second terminal and the first access network device. Optionally, with reference to the foregoing descriptions that the first information that corresponds to the at least one first anchor in the first anchor set may be determined by using the SLAM algorithm, the network device may determine, by using the SLAM algorithm based on the second information, the first information that corresponds to the at least one first anchor in the first anchor set.

The second terminal is a terminal that accumulates data and assists the network device in determining the first information, and the first terminal is a terminal that performs positioning. The second terminal and the first terminal may be a same terminal, or may be different terminals. There may be one or more second terminals, and there may be one or more first terminals. This is not limited in embodiments of this application.

The following describes the information about the radio channel and the multipath measurement information in the first information described above.
1. The information about the radio channel includes one or more of the following information: a channel impulse response (channel impulse response, CIR), channel state information (channel state information, CSI), a power delay profile (power delay profile, PDP), or a delay profile (delay profile, DP). The power delay profile may also be referred to as a power delay function, and the delay profile may also be referred to as a delay function.
   In a process in which a unit impulse signal arrives at a receive end through a channel, because the unit impulse signal may pass through different transmission paths, signal copies with different transmission delays are generated at the receive end. These delay copies respectively have different signal attenuation and frequency phase changes. The CIR represents superposition of the signal copies with different delays, including delays, power attenuation, and phase change information of a plurality of paths of a channel. The CSI is a Fourier-transformed CIR. The PDP represents CIR-derived power on a plurality of paths, corresponds to a power attenuation condition on the plurality of paths, and lacks phase information compared with the CIR and the CSI. The DP represents a delay of a received signal on each of a plurality of paths, and further omits power information compared with the PDP. In addition, there may be another radio channel information representation manner that includes delays, power attenuation, and phase change information of a plurality of paths of a channel. The manner may also be used in this solution. Details are not described herein again.
2. The first multipath measurement information includes a time difference of arrival (Time Difference of Arrival, TDOA) of at least two of a plurality of paths of the radio channel between the second terminal and the first access network device and/or one or more of the following measurement information of at least one path of the radio channel between the second terminal and the first access network device: received signal strength (Received Signal Strength, RSS), a path loss (path loss), time of arrival (Time of Arrival, TOA), time of flight (Time of Flight, TOF), an angle of arrival (Angle of Arrival, AoA), an angle of departure (Angle of Departure, AoD), round trip time (Round Trip Time, RTT), phase information, or phase difference information.

The at least one path of the radio channel between the second terminal and the first access network device may be understood as a path between the second terminal and a first anchor related to the first access network device. The path is a line-of-sight path or an equivalent line-of-sight path. The equivalent line-of-sight path may be understood as a line-of-sight path between the second terminal and the first anchor that is converted from a non-line-of-sight path between the second terminal and the first access network device by introducing the first anchor related to the first access network device.

The RSS represents strength or power of a received signal on the path, and may be used to represent a relative loss of a plurality of paths of a same channel. The path loss represents signal power attenuation caused by a plurality of factors, such as obstacles and propagation, between a transmit end and a receive end. The TOA represents time of arrival of a received signal on the path, and may be used to represent a relative delay of a plurality of paths of a same channel. The TOF may be understood as transmission time of a signal from a transmit end to a receive end. The AoA may be understood as an angle at which a signal arrives at a receive end. The AoD may be understood as an angle at which a signal leaves a transmit end. The RTT may be understood as duration of a signal traveling from a transmit end to a receive end and then back to the transmit end, and usually does not include processing time at the receive end. The phase information indicates phase information of a received signal on the path, and may be used to indicate a relative phase change of a plurality of paths of a same channel. The phase difference information is a phase change of a signal after the signal is transmitted via the path.

The plurality of paths between the second terminal and the first access network device includes one or more of the following paths: one or more line-of-sight paths, refraction paths, and reflection paths between the second terminal and the antenna of the first access network device; one or more line-of-sight paths between the second terminal and the mirror image of the antenna of the first access network device; one or more line-of-sight paths, refraction paths, and reflection paths between the second terminal and the remote radio head of the first access network device; one or more line-of-sight paths between the second terminal and the mirror image of the remote radio head of the first access network device; one or more line-of-sight paths, refraction paths, and reflection paths between the second terminal and the radio signal scatterer corresponding to the first access network device; or one or more line-of-sight paths between the second terminal and the mirror image of the radio signal scatterer corresponding to the first access network device. For a downlink signal, the radio signal scatterer corresponding to the first access network device means that the radio signal scatterer scatters a radio signal transmitted by the first access network device. When the second terminal directly detects the scattered radio signal (without further reflection, refraction, or scattering), it means that the second terminal detects a line-of-sight path between the second terminal and the radio signal scatterer corresponding to the first access network device. The same applies to an uplink signal. Details are not described herein again.

Optionally, the second information further includes a correspondence between each path corresponding to the first multipath measurement information and the the at least one first anchor in the first anchor set.

The foregoing mainly describes the information about the radio channel and the multipath measurement information. The following mainly describes how the network device obtains the firstchannel information and/or the first multipath measurement information.

Manner 1: The first channel information and/or the first multipath measurement information may be sent by the second terminal to the network device. Specifically, the second terminal sends the first channel information and/or the first multipath measurement information to the network device. Correspondingly, the network device receives the first channel information and/or the first multipath measurement information from the second terminal. Further, optionally, the second terminal sends corresponding time information for obtaining the first channel information and/or the first multipath measurement information.

Manner 2: The first channel information and/or the first multipath measurement information are/is determined by the network device.

Manner 3: The first channel information and/or the first multipath measurement information may be sent by the first access network device to the network device. Specifically, the first access network device sends the first channel information and/or the first multipath measurement information to the network device. Correspondingly, the network device receives the first channel information and/or the first multipath measurement information from the first access network device. Further, optionally, the first access network device sends corresponding time information for obtaining the first channel information and/or the first multipath measurement information.

It should be additionally noted that the first channel information and the first multipath measurement information may be obtained in different manners. For example, the first channel information is sent by the second terminal to the network device, and the first multipath measurement information is determined by the network device. Alternatively, when there are a plurality of pieces of first channel information, a part of the plurality of pieces of first channel information is sent by the second terminal to the network device, and the other part of the first channel information is determined by the network device. The same applies to the first multipath measurement information. This is not limited in embodiments of this application.

Optionally, the first multipath measurement information is multipath measurement information obtained by inputting the first channel information into a multipath measurement information extraction algorithm. The multipath measurement information extraction algorithm may use an artificial intelligence (artificial intelligence, AI) technology, which is referred to as an AI model for multipath measurement information extraction.

Further, optionally, the multipath measurement information extraction algorithm may be obtained by the network device through training. Specifically, the network device may input sample channel information into the multipath measurement information extraction algorithm to obtain output multipath measurement information, and compare the output multipath measurement information with a multipath measurement information truth value corresponding to the sample channel information, to optimize and adjust a parameter of the multipath measurement information extraction algorithm. Alternatively, the multipath measurement information may be extracted by the terminal or the network device by using a non-AI algorithm. How to obtain the sample multipath measurement information is not limited in embodiments of this application.

Further, optionally, the network device sends information about the multipath measurement information extraction algorithm to the first terminal and/or the second terminal. Correspondingly, the first terminal and/or the second terminal receive/receives the information about the multipath measurement information extraction algorithm from the network device. Based on this optional manner, after receiving the information about the multipath measurement information extraction algorithm, the second terminal may obtain the first multipath measurement information by using the multipath measurement information extraction algorithm, and then send the first multipath measurement information to the network device. In this case, the network device may not need to use the multipath measurement information extraction algorithm to obtain the first multipath measurement information. After receiving the information about the multipath measurement information extraction algorithm, the first terminal may further obtain multipath measurement information of a radio channel between the first terminal and the first access network device by using the multipath measurement information extraction algorithm, and use the multipath measurement information of the radio channel to obtain positioning information of the first terminal, to improve positioning accuracy.

Further, optionally, the multipath measurement information extraction algorithm may output an association relationship between each path in the multipath measurement information and the at least one first anchor in the first anchor set. The network device may train the multipath measurement information extraction algorithm by using a multipath association relationship sample. Specifically, the network device may input sample channel information into the multipath measurement information extraction algorithm to obtain the output association relationship between each path in the multipath measurement information and the at least one first anchor, and then compare the output association relationship with a sample association relationship, to optimize and adjust a parameter of the multipath measurement information extraction algorithm, and obtain a final multipath measurement information extraction algorithm. An association relationship determining algorithm may alternatively be independent of the multipath measurement information extraction algorithm. The multipath association relationship may alternatively be obtained by using another algorithm, for example, a Hungarian algorithm (Hungarian Algorithm) or another multipath data association (data association) algorithm. How to obtain the multipath association relationship is not limited in embodiments of this application.

In a possible implementation, the second information further includes second location information and/or third location information of the at least one first anchor. The second location information is location information of the second terminal, and the third location information is location information of the first anchor.

Optionally, the second location information and/or the third location information that corresponds to the at least one first anchor are/is from the second terminal. Specifically, the second terminal sends the second location information and/or the third location information to the network device. Correspondingly, the network device may receive the second location information and/or the third location information from the second terminal.

The second location information and the third location information that corresponds to the at least one first anchor may be determined by the second terminal. Different from the foregoing first location information, the third location information may be determined by the second terminal, and accuracy of the third location information is lower than that of the first location information. Therefore, the third location information may also be referred to as coarse-accuracy location information of the first anchor. Optionally, the second information further includes confidence or accuracy of the second location information and/or the third location information.

Further, optionally, the second terminal may determine, in one or more of the following manners, the second location information and/or the third location information that corresponds to the at least one first anchor.

Manner 1: The second terminal determines, based on a cell identifier (ID), a physical cell identifier (Physical Cell Identifier, PCI), or a synchronization signal block (Synchronization Signal and PBCH block, SSB), the second location information and/or the third location information that corresponds to the at least one first anchor.

Manner 2: The second terminal determines, by using a currently existing positioning algorithm, for example, measurement on a single cell or a plurality of cells, the second location information and/or the third location information that corresponds to the at least one first anchor.

Particularly, the second location information may alternatively be determined in the following Manner 3.

Manner 3: When the second terminal is located indoors, the second terminal may infer, in a manner of inertial navigation based on outdoor location information obtained through GNSS measurement before the second terminal enters the indoor area, a movement trajectory of the second terminal entering the room from the outdoor, to determine the second location information of the second terminal.

Certainly, the second terminal may alternatively determine, in another manner, the second location information and/or the third location information that corresponds to the at least one first anchor, or the second location information and/or the third location information that corresponds to the at least one first anchor may be determined by the first access network device, and transmitted to the second terminal. This is not limited in embodiments of this application.

Further, optionally, the second location information and/or the third location information that corresponds to the at least one first anchor may be determined by a baseband processor (baseband processor, BP) in the second terminal and transmitted to an application processor (application processor, AP), or may be determined by the AP, or may be jointly determined by the BP and the AP. The BP may also be referred to as a modem (modem).

In a possible implementation, the second information further includes internal sensor information of the second terminal. The internal sensor information may include one or more of the following information: acceleration sensor information, gyroscope information, barometer information, gravity sensor information, distance sensor information, light sensor information, or magnetic sensor information. In addition, the internal sensor information may further include other sensor information. This is not limited in embodiments of this application. It may be understood that the internal sensor information may be direct internal sensor information, or may be internal sensor information obtained through data processing (for example, filtering, smoothing, or quantization), or may be other information obtained by converting the internal sensor information. For example, the internal sensor information may be converted into information such as a speed, an acceleration, a direction, a direction change, a height, or a height change. This is not limited in embodiments of this application.

Optionally, the internal sensor information of the second terminal is from the second terminal. Specifically, the second terminal sends the internal sensor information of the second terminal to the network device. Correspondingly, the network device receives the internal sensor information of the second terminal sent by the second terminal.

Optionally, the internal sensor information may be determined by the BP in the second terminal and transmitted to the AP, or may be determined by the AP, or may be jointly determined by the BP and the AP.

It should be additionally noted that, based on the foregoing described implementation in which the network device determines the first information that corresponds to the at least one first anchor, it may be similarly learned that the network device may also determine and send second information that corresponds to at least one second anchor in a second anchor set. The second anchor set is related to a second access network device. For example, the second anchor may be an anchor, such as the second access network device, a mirror image of the second access network device, an antenna of the second access network device, a mirror image of the antenna of the second access network device, a remote radio head of the second access network device, a mirror image of the remote radio head of the second access network device, a radio signal scatterer in a radio signal propagation process of the second access network device, or a mirror image of the radio signal scatterer. The second information is similar to the first information. The second information includes one or more of location information of the second anchor, delay information of the second anchor, or angle information of the second anchor. The second information may assist the terminal device in positioning. A quantity of access network devices is not limited in embodiments of this application. In this application, the first access network device is mainly used as an example. Details are not described again in subsequent embodiments.

402: The network device sends, to the first terminal, the first information that corresponds to the at least one first anchor. Correspondingly, the first terminal receives, from the network device, the first information that corresponds to the at least one first anchor.

403: The first terminal obtains positioning information based on the first information that corresponds to the at least one first anchor.

In this embodiment of this application, the first terminal performs positioning based on the first information of the first anchor, to obtain the positioning information. The positioning information includes fourth location information. The fourth location information may also be referred to as high-accuracy location information of the first terminal. Optionally, the fourth location information includes absolute location information and/or relative location information. Further, optionally, the absolute location information is coordinates of a specific physical location of the first terminal. The relative location information is coordinates of a location of the first terminal relative to a target location. The target location may be any location. For example, the target location may be a location of the first access network device.

Optionally, the first terminal may obtain the positioning information by using a positioning algorithm based on the first information of the at least one first anchor. The positioning algorithm is a positioning algorithm for performing positioning based on a case in which an anchor location is known. The positioning algorithm may be a combination of one or more of the following algorithms: a radio SLAM algorithm, a single-station positioning algorithm, a multistation positioning algorithm, a triangulation positioning algorithm, a hyperbolic positioning algorithm, or a fingerprint positioning algorithm. The positioning algorithm may alternatively be another existing positioning algorithm. This is not limited in embodiments of this application.

Due to generally complex indoor wireless communication environments, characterized by sparse base stations, a non-line-of-sight (Non-Line-of-Sight, NLOS) environment, an unknown anchor location, an unknown delay of the remote radio head, an unknown direction of a directional anchor, and the like, an existing indoor terminal positioning algorithm cannot be implemented or is difficult to implement, or terminal positioning accuracy is insufficient after the positioning algorithm is implemented. The sparse base stations mean that a quantity of indoor access network devices (real physical devices) is small. In the existing indoor terminal positioning algorithm, only the real physical device is usually used as an anchor. However, in the present invention, the first anchor may be a real physical device or a real object, or may be a virtual device or a virtual object. In an indoor environment, one real physical access network device may usually correspond to a plurality of anchors, which equivalently increasing a quantity of anchors. For the NLOS environment, a non-line-of-sight path between the first terminal and a real physical device or a real object may be equivalent to a line-of-sight path between the first terminal and a virtual device or a virtual object corresponding to the real physical device or the real object, to convert the NLOS path into the line-of-sight (Line-of-Sight, LOS) path. For the issue of the unknown anchor location, the first information includes the location information of the first anchor, so that the first terminal can determine a location of the at least one first anchor. For the issue of the unknown delay of the remote radio head, the first information includes a transmission delay corresponding to the first anchor, and the first anchor may be a remote radio head, so that the first terminal can determine a delay of the remote radio head. For the issue of the unknown direction of the directional anchor, the first information includes the angle information of the first anchor, and the first anchor may be a directional anchor, so that the first terminal can determine a direction of the directional anchor. Therefore, the method described in this embodiment of this application helps improve positioning accuracy of the first terminal.

In a possible implementation, a specific implementation in which the first terminal performs positioning based on the first information of the at least one first anchor is as follows: The first terminal obtains the positioning information based on the first information of the at least one first anchor and the third information. The third information includes second channel information and/or second multipath measurement information. The second channel information is information about a radio channel between the first terminal and the first access network device, and the second multipath measurement information is multipath measurement information of the radio channel between the first terminal and the first access network device. For related descriptions of the information about the radio channel and the multipath measurement information herein, refer to the descriptions in step 401. Details are not described herein again in this embodiment of this application.

Optionally, the third information further includes internal sensor information of the first terminal. For related descriptions of the internal sensor information herein, refer to the descriptions in step 401. Details are not described herein again in this embodiment of this application.

Optionally, the third information further includes fifth location information. The fifth location information is location information of the first terminal that is obtained by the first terminal by using another method. The fifth location information may also be referred to as coarse-accuracy location information of the first terminal. Further, optionally, similar to the foregoing described method for determining the second location information of the second terminal, the first terminal may also determine the fifth location information in the foregoing manner in which the second terminal determines the second location information.

Optionally, the second multipath measurement information is multipath measurement information obtained by inputting the second channel information by the first terminal into a multipath measurement information extraction algorithm. Further, optionally, information about the multipath measurement information extraction algorithm is obtained by the network device through training. Specifically, the network device sends the information about the multipath measurement information extraction algorithm to the first terminal. Correspondingly, the first terminal receives the information about the multipath measurement information extraction algorithm from the network device. The first terminal may determine the multipath measurement information extraction algorithm based on the information about the multipath measurement information extraction algorithm. For related descriptions of the multipath measurement information extraction algorithm herein, refer to the descriptions in step 401. Details are not described herein again in this embodiment of this application.

In a possible implementation, the network device sends, to the first terminal, an identifier of at least one cell associated with the first access network device. Correspondingly, the first terminal receives the identifier of the at least one cell associated with the first access network device. The identifier of the at least one cell associated with the first access network device may be used to assist the first terminal in determining information about a rough location of the first terminal. The identifier of the at least one cell associated with the first access network device may be further used to assist the first terminal in determining an application scope of the first information that corresponds to the at least one first anchor. It may be understood that the first terminal needs to ensure that the at least one first anchor is related to the first access network device or the at least one cell, and the third information is also related to the first access network device or the at least one cell. so as to obtain the positioning information based on the first information of the at least one first anchor and the third information. The identifier of the at least one cell is used to assist in determining the two types of correlations.

Further, optionally, the positioning information obtained by the first terminal based on the first information that corresponds to the at least one first anchor may be determined by the BP, or may be determined by the AP, or may be jointly determined by the BP and the AP.

To improve terminal positioning accuracy, with reference to the network architecture in FIG. 2, an embodiment of this application provides a positioning method. As shown in FIG. 7, the positioning method includes step 701 to step 703. The method shown in FIG. 7 is performed by a network device and a first terminal, or the method shown in FIG. 7 may be performed by a chip in the network device and a chip in the first terminal. FIG. 7 is described by using the network device and the first terminal as an example. Execution bodies of the positioning method are not limited in embodiments of this application.

701: The network device determines a first positioning algorithm, where the first positioning algorithm is used for terminal positioning.

In this embodiment of this application, the first positioning algorithm may also be referred to as a first positioning model, and is mainly used to assist the terminal in positioning.

Optionally, the first positioning algorithm is obtained by the network device through training. Specifically, the network device determines a positioning model based on second information. The second information includes first channel information and/or first multipath measurement information. The first channel information is information about a radio channel between a second terminal and a first access network device, and the first multipath measurement information is multipath measurement information of the radio channel between the second terminal and the first access network device. Concepts of the second information, the first channel information, and the first multipath measurement information that are described in this embodiment of this application are the same as those of the second information, the first channel information, and the first multipath measurement information that are described in the embodiment corresponding to FIG. 4. Details are not described again in this embodiment of this application. Further, optionally, the network device determines the first positioning algorithm by using a SLAM algorithm based on the second information. The SLAM algorithm is the same as the SLAM algorithm described in the embodiment in FIG. 4. Details are not described herein again.

The second terminal is a terminal that accumulates data and assists the network device in determining the first positioning algorithm, and the first terminal is a terminal that performs positioning. The second terminal and the first terminal may be a same terminal, or may be different terminals. There may be one or more second terminals, and there may be one or more first terminals. This is not limited in embodiments of this application.

In a possible implementation, the network device determines first information that corresponds to at least one first anchor in a first anchor set. The first information includes one or more of the following information: first location information, first delay information, or first angle information. Optionally, the network device determines, based on the second information, the first information that corresponds to the at least one first anchor in the first anchor set. Further, optionally, the network device obtains, by using the SLAM algorithm based on the second information, the first information that corresponds to the at least one first anchor in the first anchor set.

The first anchor set is related to the first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer.

Concepts of the first anchor, the first anchor set, the first access network device, the first information, the first location information, the first delay information, and the first angle information that are described in this embodiment of this application are the same as those of the first anchor, the first anchor set, the first access network device, the first information, the first location information, the first delay information, and the first angle information in the embodiment corresponding to FIG. 4. For details, refer to the corresponding descriptions in step 401. Details are not described herein again.

In a possible implementation, the second information further includes second location information and/or third location information that corresponds to the at least one first anchor. The second location information is location information of the second terminal, and the third location information is location information of the first anchor. The second location information and the third location information are the same as the second location information and the third location information that are described in the embodiment in FIG. 4. For details, refer to the corresponding descriptions in step 401. Details are not described herein again.

In a possible implementation, the second information further includes internal sensor information of the second terminal. The internal sensor information is the same as the internal sensor information described in the embodiment in FIG. 4. Details are not described herein again.

702: The network device sends information about the first positioning algorithm to the first terminal. Correspondingly, the first terminal receives the information about the first positioning algorithm from the network device.

In this embodiment of this application, the information about the first positioning algorithm includes an internal parameter or an obtaining method of the first positioning algorithm. After receiving the information about the first positioning algorithm, the first terminal may determine or obtain the first positioning algorithm based on the information about the first positioning algorithm.

Optionally, the network device sends, to the first terminal, the first information that corresponds to the at least one first anchor in the first anchor set. Correspondingly, the first terminal receives, from the network device, the first information that corresponds to the at least one first anchor in the first anchor set.

703: The first terminal obtains positioning information by using the first positioning algorithm.

In this embodiment of this application, the first terminal performs positioning by using the first positioning algorithm, to obtain the positioning information. A concept of the positioning information is the same as that of the positioning information described in FIG. 4. Details are not described again in this embodiment of this application. Optionally, if receiving the first information of the first anchor from the network device, the first terminal may obtain the positioning information by using the first positioning algorithm based on the first information.

Based on the method described in this embodiment of this application, positioning is performed by using the first positioning algorithm obtained by the network device through training, which helps improve positioning accuracy of the first terminal. In addition, in a possible implementation method, the information about the radio channel may be directly input into the first positioning algorithm, and a radio channel multipath measurement result does not need to be extracted from the information about the radio channel. This can reduce computation complexity of the terminal, and can also reduce an error in extracting the radio channel multipath measurement result of the terminal, thereby improving positioning accuracy.

In a possible implementation, that the first terminal obtains the positioning information by using the first positioning algorithm is specifically: The first terminal inputs third information into the first positioning algorithm, to obtain the positioning information. The third information is the same as the third information described in the embodiment in FIG. 4. For details, refer to the descriptions in step 403. Details are not described herein again.

In a possible implementation, that the first terminal obtains the positioning information by using the first positioning algorithm based on the first information that corresponds to the at least one first anchor in the first anchor set is specifically: The first terminal inputs, into the first positioning algorithm, the third information and the first information that corresponds to the at least one first anchor in the first anchor set, to obtain the positioning information. The third information is the same as the third information described in the embodiment in FIG. 4. For details, refer to the descriptions in step 403. Details are not described herein again.

Optionally, the third information further includes internal sensor information and/or fifth location information of the first terminal. The fifth location information is the same as the fifth location information described in the embodiment in FIG. 4. For details, refer to the descriptions in step 403. Details are not described herein again.

Optionally, the foregoing described information, about the first positioning algorithm, sent by the network device further includes an identifier of a cell to which the first positioning algorithm is applicable. The first terminal may determine an application scope of the first positioning algorithm based on the identifier of the cell to which the first positioning algorithm is applicable. The cell to which the first positioning algorithm is applicable includes at least one cell associated with the first access network device. The identifier of the cell to which the first positioning algorithm is applicable may be used to assist the first terminal in determining the application scope of the first positioning algorithm. It may be understood that, the first terminal needs to ensure that the first positioning algorithm is related to the first access network device or the at least one cell, and the third information is also related to the first access network device or the at least one cell, so as to obtain the positioning information by using the first positioning algorithm based on the third information. The identifier of the at least one cell is used to assist in determining the two types of correlations.

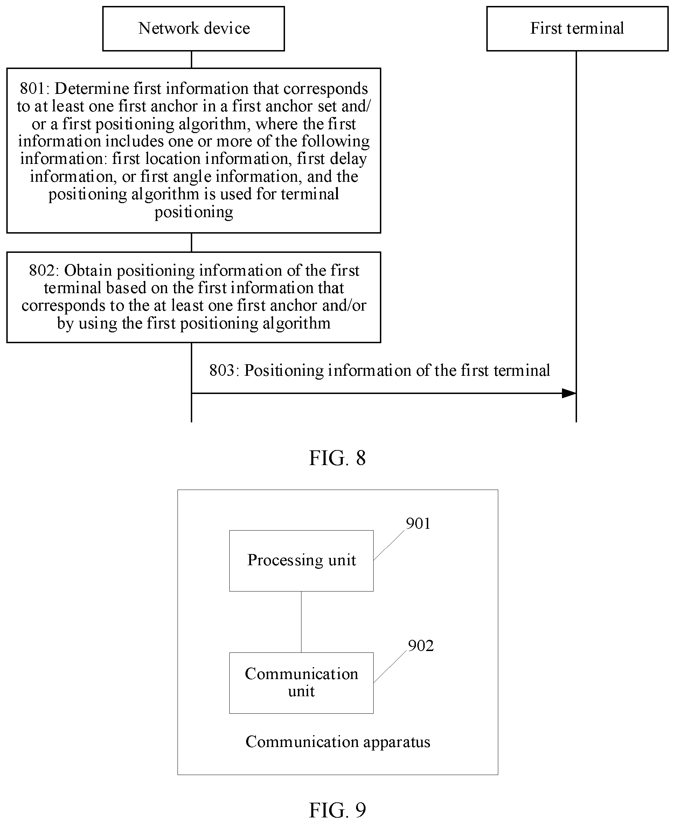

To improve terminal positioning accuracy, an embodiment of this application provides a positioning method. As shown in FIG. 8, the positioning method includes step 801 to step 803. The method shown in FIG. 8 is performed by a network device and a first terminal, or the method shown in FIG. 8 may be performed by a chip in the network device and a chip in the first terminal. FIG. 8 is described by using the network device and the first terminal as an example. Execution bodies of the positioning method are not limited in embodiments of this application. The first terminal may be a terminal that is correspondingly described in the communication system shown in FIG. 1.

801: The network device determines first information that corresponds to at least one first anchor in a first anchor set and/or a first positioning algorithm, where the first information includes one or more of the following information: first location information, first delay information, or first angle information, and the positioning algorithm is used for terminal positioning.

In this embodiment of this application, the first information is the same as the first information described in the embodiment corresponding to FIG. 4, and the first positioning algorithm is the same as the first positioning algorithm described in the embodiment corresponding to FIG. 7. For a specific implementation in which the network device determines the first information of the first anchor and/or the first positioning algorithm, refer to the descriptions corresponding to step 401 and step 701. Details are not described in this embodiment of this application.

802: The network device obtains positioning information of the first terminal based on the first information that corresponds to the at least one first anchor and/or by using the first positioning algorithm.

In this embodiment of this application, the positioning information of the first terminal is the same as the positioning information described in the embodiment corresponding to FIG. 4. For a specific implementation of step 802, refer to the descriptions in step 403 and step 703. A main difference lies in that the execution bodies of step 403 and step 703 are the first terminal, and the execution body of step 802 is the network device. Details are not described in this embodiment of this application.

In a possible implementation, a specific implementation in which the network device obtains the positioning information of the first terminal based on the first information of the at least one first anchor and/or by using the first positioning algorithm is as follows: The network device obtains the positioning information of the first terminal based on third information and the first information of the at least one first anchor and/or by using the first positioning algorithm. Optionally, the third information may be determined by the network device itself, or may be sent by the first terminal to the network device. In other words, the first terminal sends the third information to the network device. Correspondingly, the network device receives the third information from the first terminal. Certainly, the network device may alternatively obtain the third information via another device other than the first terminal. This is not limited in embodiments of this application. The third information is the same as the third information described in the embodiment corresponding to FIG. 4. Details are not described in this embodiment of this application.

803: The network device sends the positioning information of the first terminal to the first terminal.

Due to generally complex indoor wireless communication environments, characterized by sparse base stations, an NLOS environment, an unknown anchor location, an unknown delay of the remote radio head, an unknown direction of a directional anchor, and the like, an existing indoor terminal positioning algorithm cannot be implemented or is difficult to implement, or terminal positioning accuracy is insufficient after the positioning algorithm is implemented. The sparse base stations mean that a quantity of indoor access network devices (real physical devices) is small. In the existing indoor terminal positioning algorithm, only the real physical device is usually used as an anchor. However, in the present invention, the first anchor may be a real physical device or a real object, or may be a virtual device or a virtual object. In an indoor environment, one real physical access network device may usually correspond to a plurality of anchors, which equivalently increasing a quantity of anchors. For the NLOS environment, a non-line-of-sight path between the first terminal and a real physical device or a real object may be equivalent to a line-of-sight path between the first terminal and a virtual device or a virtual object corresponding to the real physical device or the real object, to convert the NLOS path into the line-of-sight LOS path. For the issue of the unknown anchor location, the first information includes the location information of the first anchor, so that the first terminal can determine a location of the at least one first anchor. For the issue of the unknown delay of the remote radio head, the first information includes a transmission delay corresponding to the first anchor, and the first anchor may be a remote radio head, so that the first terminal can determine a delay of the remote radio head. For the issue of the unknown direction of the directional anchor, the first information includes the angle information of the first anchor, and the first anchor may be a directional anchor, so that the first terminal can determine a direction of the directional anchor. Therefore, positioning is performed based on the first information and/or by using the first positioning algorithm determined by the network device, which helps improve positioning accuracy of the first terminal. In addition, in this embodiment, determining the positioning information of the first terminal by the network device also helps reduce a computation amount of the first terminal.

It should be noted that the methods described in the foregoing embodiments of this application are applicable to an indoor environment. An outdoor environment in which one physical access network device corresponds to a plurality of anchors may also exists, and therefore, the outdoor environment is also applicable to the methods provided in this application. An environment to which the proposed methods are applicable is not limited in embodiments of this application. In an outdoor environment, each method provided in embodiments of this application may alternatively work independently or in collaboration with another positioning method (for example, GNSS positioning). Details are not described herein again.

It should be noted that the methods described in the foregoing embodiments of this application are mainly described by using an example in which there is one real physical access network device (namely, the first access network device) in an environment. An anchor (namely, the first anchor) related to the real physical access network device is used to assist in positioning the terminal. It may be understood that the methods described in embodiments of this application are also applicable to a scenario in which there are a plurality of real physical access network devices. For example, when there are M real physical access network devices, one real physical access network device may correspond to one anchor set, real physical access network devices corresponding to different anchor sets are different, and each anchor set includes the at least one first anchor. It may be understood that the anchor included in the anchor set is related to a real physical access network device corresponding to the anchor included the anchor set. A total quantity of all anchors included in M anchor sets corresponding to the M real physical access network devices is N. The N anchors may be used to assist the terminal in positioning. M is less than or equal to N, and both M and N are positive integers.

For example, in addition to the first anchor, related to the first access network device described in the foregoing embodiment, that may be used to assist the terminal in positioning, another anchor related to the access network device may be used to assist the terminal. For example, there may be a second access network device. The second access network device is related to a second anchor set. The second anchor set includes at least one second anchor, and the second anchor may be used to assist the terminal in positioning. The second anchor may be an anchor, such as the second access network device, a mirror image of the second access network device, an antenna of the second access network device, a mirror image of the antenna of the second access network device, a remote radio head of the second access network device, a mirror image of the remote radio head of the second access network device, a radio signal scatterer in a radio signal propagation process of the second access network device, or a mirror image of the radio signal scatterer.

To implement functions in the method provided in the foregoing embodiments of this application, the network device and the first terminal each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 9 is a diagram of a structure of a communication apparatus according to an embodiment of this application. The communication apparatus may be a network device or a first terminal, or an apparatus that can be used in combination with the network device or the first terminal. In a possible implementation, the communication apparatus may include a module or unit that performs and that one-to-one corresponds to the method/operations/steps/actions performed by the first terminal or the network device in the method embodiment shown in FIG. 4, FIG. 7, or FIG. 8. The unit may be a hardware circuit, or may be software, or may be implemented by a hardware circuit in combination with software.

The communication apparatus shown in FIG. 9 may include a processing unit 901 and a communication unit 902. The processing unit 901 is configured to perform data processing. A receiving unit and a sending unit are integrated into the communication unit 902. The communication unit 902 may also be referred to as a transceiver unit. Alternatively, the communication unit 902 may be split into a receiving unit and a sending unit.

The communication apparatus shown in FIG. 9 may be a network device, or an apparatus that can be used in combination with the network device. The communication apparatus may alternatively be a chip system.

When the communication apparatus is configured to perform a part or all of functions of the network device in the method embodiment described in FIG. 4, the processing unit 901 is configured to determine first information that corresponds to at least one first anchor in a first anchor set. The first information includes one or more of the following information: first location information, first delay information, or first angle information. The first location information is location information of the first anchor, the first delay information is delay information of the first anchor, and the first angle information is angle information of the first anchor. The first anchor set is related to a first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer. The communication unit 902 is configured to send, to the first terminal, the first information that corresponds to the at least one first anchor in the first anchor set.

In a possible implementation, when determining the first information that corresponds to the at least one first anchor in the first anchor set, the processing unit 901 is specifically configured to determine the at least one first anchor in the first anchor set based on second information. The second information includes first channel information and/or first multipath measurement information. The first channel information is information about a radio channel between a second terminal and the first access network device, and the first multipath measurement information is multipath measurement information of the radio channel between the second terminal and the first access network device.

In a possible implementation, before the processing unit 901 determines, based on the second information, the first information that corresponds to the at least one first anchor in the first anchor set, the communication unit 902 is further configured to receive the first channel information and/or the first multipath measurement information from the second terminal.

In a possible implementation, the first multipath measurement information is multipath measurement information obtained by inputting the first channel information into a multipath measurement information extraction algorithm.

In a possible implementation, the communication unit 902 is further configured to send information about the multipath measurement information extraction algorithm to the first terminal.

In a possible implementation, the second information further includes second location information and/or third location information that corresponds to the at least one first anchor. The second location information is location information of the second terminal, and the third location information is location information of the first anchor. The communication unit 902 is further configured to receive, from the second terminal, the second location information and/or the third location information that corresponds to the at least one first anchor.

In a possible implementation, the second information further includes internal sensor information of the second terminal.

In a possible implementation, the second information further includes corresponding time information for the second terminal to obtain the first channel information.

In a possible implementation, when determining, based on the second information, the first information that corresponds to the at least one first anchor in the first anchor set, the processing unit 901 is specifically configured to determine, based on the second information, the first information that corresponds to the at least one first anchor in the first anchor set by using a radio simultaneous localization and mapping SLAM algorithm.

In a possible implementation, the information about the radio channel includes one or more of the following information: a channel impulse response CIR, channel state information CSI, a power delay profile PDP, or a delay profile DP.

In a possible implementation, the first multipath measurement information includes a time difference of arrival TDOA of at least two of a plurality of paths of the radio channel between the second terminal and the first access network device and/or one or more of the following measurement information of at least one path of the radio channel between the second terminal and the first access network device: received signal strength RSS, a path loss path loss, time of arrival TOA, time of flight TOF, an angle of arrival AoA, an angle of departure AoD, round trip time RTT, phase information, or phase difference information.

In a possible implementation, the the first delay information includes a signal transceiver circuit delay and/or a radio frequency transmission delay and/or a delay of the remote radio head.

In a possible implementation, the first angle information includes azimuth information and/or downtilt information of a directional anchor.

When the communication apparatus is configured to perform a part or all of functions of the first terminal in the method embodiment described in FIG. 4, the communication unit 902 is configured to receive first information that corresponds to at least one first anchor in a first anchor set. The first information includes one or more of the following information: first location information, first delay information, or first angle information. The first location information is location information of the first anchor, the first delay information is delay information of the first anchor, and the first angle information is angle information of the first anchor. The first anchor set is related to a first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer. The processing unit 901 is configured to obtain positioning information of the first terminal based on the first information that corresponds to the at least one first anchor in the first anchor set.

In a possible implementation, when obtaining the positioning information based on the first information that corresponds to the at least one first anchor in the first anchor set, the processing unit 901 is specifically configured to obtain the positioning information of the first terminal based on the first information that corresponds to the at least one first anchor in the first anchor set and third information. The third information includes second channel information and/or second multipath measurement information. The second channel information is information about a radio channel between the first terminal and the first access network device, and the second multipath measurement information is multipath measurement information of the radio channel between the first terminal and the first access network device.

In a possible implementation, the second multipath measurement information is multipath measurement information obtained by inputting the second channel information into a multipath measurement information extraction algorithm.

In a possible implementation, the communication unit 902 is further configured to receive information about the multipath measurement information extraction algorithm.

In a possible implementation, the third information further includes internal sensor information of the first terminal.

In a possible implementation, the information about the radio channel includes one or more of the following information: a channel impulse response CIR, channel state information CSI, a power delay profile PDP, or a delay profile DP.

In a possible implementation, the second multipath measurement information includes a time difference of arrival TDOA of at least two of a plurality of paths of the radio channel between the first terminal and the first access network device and/or one or more of the following measurement information of at least one path of the radio channel between the first terminal and the first access network device: received signal strength RSS, a path loss path loss, time of arrival TOA, time of flight TOF, an angle of arrival AoA, an angle of departure AoD, round trip time RTT, phase information, or phase difference information.

In a possible implementation, the the first delay information includes a signal transceiver circuit delay and/or a radio frequency transmission delay and/or a delay of the remote radio head.

In a possible implementation, the first angle information includes azimuth information and/or downtilt information of a directional anchor.

When the communication apparatus is configured to perform a part or all of functions of the network device in the method embodiment described in FIG. 7, the processing unit 901 is configured to determine a first positioning algorithm, where the first positioning algorithm is used for terminal positioning. The communication unit 902 is configured to send information about the first positioning algorithm to a first terminal.

In a possible implementation, the processing unit 901 is further configured to determine, by using a radio SLAM algorithm, first information that corresponds to at least one first anchor in a first anchor set. The communication unit 902 is further configured to send, to the first terminal, the first information that corresponds to the at least one first anchor in the first anchor set. The first information includes one or more of the following information: first location information, first delay information, or first angle information. The first location information is location information of the first anchor, the first delay information is delay information of the first anchor, and the first angle information is angle information of the first anchor. The first anchor set is related to a first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer.

In a possible implementation, the information about the first positioning algorithm further includes an identifier of a cell to which the first positioning algorithm is applicable and/or first information of an anchor related to the cell.

In a possible implementation, when determining the first positioning algorithm, the processing unit 901 is specifically configured to determine the first positioning algorithm based on second information. The second information includes first channel information and/or first multipath measurement information. The first channel information is information about a radio channel between a second terminal and the first anchor, and the first multipath measurement information is multipath measurement information of a radio channel between the second terminal and the first anchor.

In a possible implementation, before the processing unit 901 determines the first positioning algorithm based on the second information, the communication unit 902 is further configured to receive the first channel information and/or the first multipath measurement information from the second terminal.

In a possible implementation, the first multipath measurement information is multipath measurement information obtained by inputting the first channel information into a multipath measurement information extraction algorithm.

In a possible implementation, the communication unit 902 is further configured to send information about the multipath measurement information extraction algorithm to the first terminal and/or the second terminal.

In a possible implementation, the second information further includes second location information and/or third location information that corresponds to the at least one first anchor. The second location information is location information of the second terminal, and the third location information is location information of the first anchor. The communication unit 902 is further configured to receive, from the second terminal, the second location information and/or the third location information that corresponds to the at least one first anchor.

In a possible implementation, the second information further includes internal sensor information of the second terminal.

In a possible implementation, the second information further includes corresponding time information for the second terminal to obtain the first channel information.

In a possible implementation, the information about the radio channel includes one or more of the following information: a channel impulse response CIR, channel state information CSI, a power delay profile PDP, or a delay profile DP.

In a possible implementation, the first multipath measurement information includes a time difference of arrival TDOA of at least two of a plurality of paths of the radio channel between the second terminal and the first access network device and/or one or more of the following measurement information of at least one path of the radio channel between the second terminal and the first access network device: received signal strength RSS, a path loss path loss, time of arrival TOA, time of flight TOF, an angle of arrival AoA, an angle of departure AoD, round trip time RTT, phase information, or phase difference information.

The at least one path of the radio channel between the second terminal and the first access network device may be understood as a path between the second terminal and a first anchor related to the first access network device. The path is a line-of-sight path or an equivalent line-of-sight path. The equivalent line-of-sight path may be understood as a line-of-sight path between the second terminal and the first anchor that is converted from a non-line-of-sight path between the second terminal and the first access network device by introducing the first anchor related to the first access network device.

In a possible implementation, the first delay information includes a signal transceiver circuit delay and/or a radio frequency transmission delay.

In a possible implementation, the first angle information includes azimuth information and/or downtilt information of a directional anchor.

In a possible implementation, the information about the first positioning algorithm further includes an identifier of a cell to which the first positioning algorithm is applicable and/or first information of an anchor related to the cell to which the first positioning algorithm is applicable.

In a possible implementation, the communication unit 902 is further configured to send, to the first terminal, an identifier of at least one cell associated with the first access network device.

When the communication apparatus is configured to perform a part or all of functions of the first terminal in the method embodiment described in FIG. 7, the communication unit 902 is configured to receive information about a first positioning algorithm. The processing unit 901 is configured to obtain positioning information by using the first positioning algorithm.

In a possible implementation, the communication unit 902 is further configured to receive first information that corresponds to at least one first anchor in a first anchor set. The first information includes one or more of the following information: first location information, first delay information, or first angle information. The anchor is a reference point used to anchor a terminal device location. The first location information is location information of the first anchor, the first delay information is delay information of the first anchor, and the first angle information is angle information of the first anchor. The first anchor set is related to a first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer. When obtaining the positioning information by using the first positioning algorithm, the processing unit 901 is specifically configured to obtain the positioning information based on the first information that corresponds to the at least one first anchor in the first anchor set and/or by using the first positioning algorithm.

In a possible implementation, the information about the first positioning algorithm further includes an identifier of a cell to which the first positioning algorithm is applicable and/or first information of an anchor related to the cell.

In a possible implementation, when obtaining the positioning information by using the first positioning algorithm, the processing unit 901 is specifically used by the first terminal to obtain the positioning information by using the first positioning algorithm based on third information. The third information includes second channel information and/or second multipath measurement information. The second channel information is information about a radio channel between the first terminal and the first access network device, and the second multipath measurement information is multipath measurement information of the radio channel between the first terminal and the first access network device.

In a possible implementation, the second multipath measurement information is multipath measurement information obtained by inputting the second channel information into a multipath measurement information extraction algorithm.

In a possible implementation, the communication unit 902 is further configured to receive information about the multipath measurement information extraction algorithm.

In a possible implementation, the third information further includes internal sensor information of the first terminal.

In a possible implementation, the information about the radio channel includes one or more of the following information: a channel impulse response CIR, channel state information CSI, a power delay profile PDP, or a delay profile DP.

In a possible implementation, the second multipath measurement information includes a time difference of arrival TDOA of at least two of a plurality of paths of the radio channel between the first terminal and the first access network device and/or one or more of the following measurement information of at least one path of the radio channel between the first terminal and the first access network device: received signal strength RSS, a path loss path loss, time of arrival TOA, time of flight TOF, an angle of arrival AoA, an angle of departure AoD, round trip time RTT, phase information, or phase difference information.

In a possible implementation, the the first delay information includes a signal transceiver circuit delay and/or a radio frequency transmission delay and/or a delay of the remote radio head.

In a possible implementation, the first angle information includes azimuth information and/or downtilt information of a directional anchor.

When the communication apparatus is configured to perform a part or all of functions of the network device in the method embodiment described in FIG. 8, the processing unit 901 is configured to determine first information that corresponds to at least one first anchor in a first anchor set and/or a first positioning algorithm. The first information includes one or more of the following information: first location information, first delay information, or first angle information. The anchor is a reference point used to anchor a terminal device location. The first anchor set is related to a first access network device. The first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer. The processing unit 901 is further configured to obtain positioning information of a first terminal based on the first information that corresponds to the at least one first anchor and/or by using the first positioning algorithm. The communication unit 902 is configured to send location information to the first terminal.

In a possible implementation, when determining the first information and/or the first positioning algorithm, the processing unit 901 is specifically configured to determine, based on second information, the first information that corresponds to the at least one first anchor in the first anchor set and/or the first positioning algorithm. The second information includes first channel information and/or first multipath measurement information. The first channel information is information about a radio channel between a second terminal and the first access network device, and the first multipath measurement information is multipath measurement information of the radio channel between the second terminal and the first access network device.

In a possible implementation, before the processing unit 901 determines the first information and/or the first positioning algorithm based on the second information, the communication unit 902 is further configured to receive the first channel information and/or the first multipath measurement information from the second terminal.

In a possible implementation, the first multipath measurement information is multipath measurement information obtained by inputting the first channel information into a multipath measurement information extraction algorithm.

In a possible implementation, the communication unit 902 is further configured to send information about the multipath measurement information extraction algorithm to the first terminal and/or the second terminal.

In a possible implementation, the second information further includes second location information and/or third location information that corresponds to the at least one first anchor. The second location information is location information of the second terminal, and the third location information is location information of the first anchor. The communication unit 902 is configured to receive, from the second terminal, the second location information and/or the third location information that corresponds to the at least one first anchor.

In a possible implementation, the second information further includes internal sensor information of the second terminal.

In a possible implementation, the second information further includes corresponding time information for the second terminal to obtain the first channel information.

In a possible implementation, when obtaining the positioning information of the first terminal based on the first information that corresponds to the the at least one first anchor and/or by using the first positioning algorithm, the processing unit 901 is specifically obtain the positioning information of the first terminal based on third information and based on the first information that corresponds to the the at least one first anchor and/or by using the first positioning algorithm. The third information includes second channel information and/or second multipath measurement information. The second channel information is information about a radio channel between the first terminal and the first access network device, and the second multipath measurement information is multipath measurement information of the radio channel between the first terminal and the first access network device.

In a possible implementation, before the processing unit 901 obtains the positioning information of the first terminal based on the first information that corresponds to the the at least one first anchor and/or by using the first positioning algorithm, the communication unit 902 is further configured to receive the second channel information and/or the second multipath measurement information from the first terminal.

In a possible implementation, the third information further includes internal sensor information of the first terminal. the internal sensor information from the first terminal.

In a possible implementation, the information about the radio channel includes one or more of the following information: a channel impulse response CIR, channel state information CSI, a power delay profile PDP, or a delay profile DP.

In a possible implementation, the first multipath measurement information includes a time difference of arrival TDOA of at least two of a plurality of paths of the radio channel between the second terminal and the first access network device and/or one or more of the following measurement information of at least one path of the radio channel between the second terminal and the first access network device: received signal strength RSS, a path loss path loss, time of arrival TOA, time of flight TOF, an angle of arrival AoA, an angle of departure AoD, round trip time RTT, phase information, or phase difference information.

In a possible implementation, the second multipath measurement information includes a time difference of arrival TDOA of at least two of a plurality of paths of the radio channel between the first terminal and the first access network device and/or one or more of the following measurement information of at least one path of the radio channel between the first terminal and the first access network device: received signal strength RSS, a path loss path loss, time of arrival TOA, time of flight TOF, an angle of arrival AoA, an angle of departure AoD, round trip time RTT, phase information, or phase difference information.

In a possible implementation, the the first delay information includes a signal transceiver circuit delay and/or a radio frequency transmission delay and/or a delay of the remote radio head.

In a possible implementation, the first angle information includes azimuth information and/or downtilt information of a directional anchor.

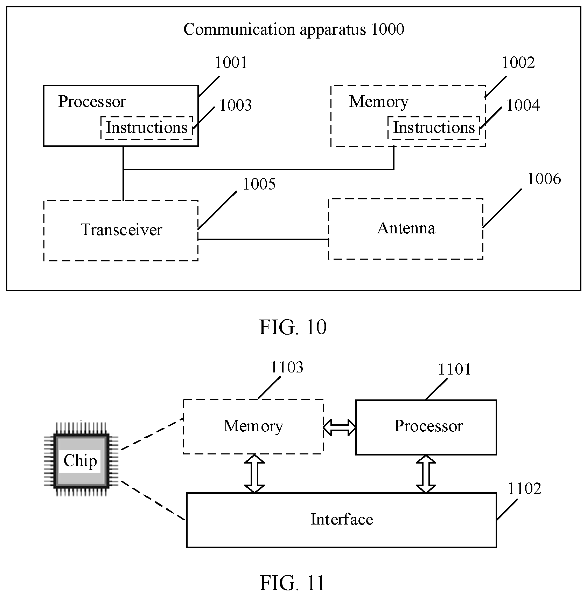

FIG. 10 is a diagram of a structure of another communication apparatus. The communication apparatus 1000 may be the first terminal in the foregoing method embodiments, or may be a chip, a chip system, a processor, or the like that supports the first terminal in implementing the foregoing methods. The communication apparatus may be configured to implement the methods described in the foregoing method embodiments. For details, refer to the descriptions in the foregoing method embodiments.

Alternatively, the communication apparatus 1000 may be the network device in the foregoing method embodiments, or may be a chip, a chip system, a processor, or the like that supports the network device in implementing the foregoing methods. The communication apparatus may be configured to implement the methods described in the foregoing method embodiments. For details, refer to the descriptions in the foregoing method embodiments.

The communication apparatus 1000 may include one or more processors 1001. The processor 1001 may be a general-purpose processor, a dedicated processor, or the like. For example, the processor 1001 may be a baseband processor or a central processing unit. The baseband processor may be configured to process a communication protocol and communication data. The central processing unit may be configured to: control a communication apparatus (for example, a base station, a baseband chip, a terminal, a terminal chip, a first terminal, or a network device), execute a software program, and process data of the software program.

Optionally, the communication apparatus 1000 may include one or more memories 1002 that may store instructions 1004. The instructions may be run on the processor 1001, to enable the communication apparatus 1000 to perform the methods described in the foregoing method embodiments. Optionally, the memory 1002 may further store data. The processor 1001 and the memory 1002 may be separately disposed, or may be integrated together.

Optionally, the communication apparatus 1000 may further include a transceiver 1005 and an antenna 1006. The transceiver 1005 may be referred to as a transceiver unit, a transceiver machine, a transceiver circuit, or the like, and is configured to implement a transceiver function. The transceiver 1005 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

If the communication apparatus 1000 is the first terminal, the processor 1001 is configured to perform a data processing operation of the first terminal in the foregoing method embodiments; and the transceiver 1005 is configured to perform data sending and receiving operations of the first terminal in the foregoing method embodiments.

Alternatively, if the communication apparatus 1000 is the network device, the processor 1001 is configured to perform a data processing operation of the network device in the foregoing method embodiments. The transceiver 1005 is configured to perform data sending and data receiving operations of the network device in the foregoing method embodiments.

In another possible design, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1001 may store instructions 1003, and the instructions 1003 are run on the processor 1001, to cause the communication apparatus 1000 to perform the methods described in the foregoing method embodiments. The instructions 1003 may be built into the processor 1001. In this case, the processor 1001 may be implemented by hardware.

In still another possible design, the communication apparatus 1000 may include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like.

The communication apparatus described in the foregoing embodiment may be a first terminal or a network device, but a scope of the communication apparatus described in embodiments of this application is not limited thereto, and a structure of the communication apparatus may not be limited to the structure in FIG. 10. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (mobile station modem, MSM);
(4) a module that can be embedded in another device;
(5) a receiver, a terminal, an intelligent terminal, a cellular phone, a wireless device, a handheld device, a mobile unit, a vehicle-mounted device, a cloud device, an artificial intelligence device, or the like; or
(6) another device or the like.

For a case in which the communication apparatus may be a chip or a chip system, refer to a structure of a chip shown in FIG. 11. The chip shown in FIG. 11 includes a processor 1101 and an interface 1102. Optionally, the chip may further include a memory 1103. There may be one or more processors 1101, and there may be a plurality of interfaces 1102.

In a design, when the chip is configured to implement functions of the first terminal in embodiments of this application:
the interface 1102 is configured to input or output a signal; and
the processor 1101 is configured to perform a data processing operation of the first terminal in the foregoing method embodiments.

In another design, when the chip is configured to implement functions of the network device in embodiments of this application:
the interface 1102 is configured to input or output a signal; and
the processor 1101 is configured to perform a data processing operation of the network device in the foregoing method embodiments.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component.

It may be understood that the memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer-readable medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In the foregoing embodiments, the description of each embodiment has respective focuses. For a part that is not described in detail in an embodiment, refer to related descriptions in other embodiments.

## Claims

1. A positioning method, wherein the method comprises:
determining first information, wherein the first information corresponds to at least one first anchor in a first anchor set, the first information comprises one or more of the following information: first location information, first delay information, or first angle information, the first location information is location information of the first anchor, the first delay information is delay information of the first anchor, and the first angle information is angle information of the first anchor; and
the first anchor set is related to a first access network device, and the first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer; and
sending the first information to a first terminal.

2. The method according to claim 1, wherein the determining the first information comprises:
determining the first information based on second information, wherein the second information comprises first channel information and/or first multipath measurement information, the first channel information is information about a radio channel between a second terminal and the first access network device, and the first multipath measurement information is multipath measurement information of the radio channel between the second terminal and the first access network device.

3. The method according to claim 2, wherein before the determining the first information based on the second information, the method further comprises:
receiving the first channel information and/or the first multipath measurement information from the second terminal.

4. The method according to claim 2, wherein the first multipath measurement information is multipath measurement information obtained by inputting the first channel information into a multipath measurement information extraction algorithm.

5. The method according to claim 4, wherein the method further comprises:
sending information about the multipath measurement information extraction algorithm to the first terminal and/or the second terminal.

6. The method according to any one of claims 2 to 5, wherein the second information further comprises second location information and/or third location information that corresponds to the at least one first anchor, the second location information is location information of the second terminal, and the third location information is location information of the first anchor; and
the method further comprises:
receiving, from the second terminal, the second location information and/or the third location information that corresponds to the at least one first anchor.

7. The method according to any one of claims 2 to 6, wherein the second information further comprises internal sensor information of the second terminal.

8. The method according to any one of claims 2 to 7, wherein the second information further comprises corresponding time information for the second terminal to obtain the first channel information.

9. The method according to any one of claims 2 to 8, wherein the determining the first information based on the second information comprises:
determining the first information by using a radio simultaneous localization and mapping SLAM algorithm based on the second information.

10. The method according to any one of claims 1 to 9, wherein the information about the radio channel comprises one or more of the following information: a channel impulse response CIR, channel state information CSI, a power delay profile PDP, or a delay profile DP.

11. The method according to any one of claims 1 to 10, wherein the first multipath measurement information comprises a time difference of arrival TDOA of at least two of a plurality of paths of the radio channel between the second terminal and the first access network device and/or one or more of the following measurement information of at least one path of the radio channel between the second terminal and the first access network device: received signal strength RSS, a path loss (path loss), time of arrival TOA, time of flight TOF, an angle of arrival AoA, an angle of departure AoD, round trip time RTT, phase information, or phase difference information.

12. The method according to any one of claims 1 to 11, wherein the first delay information comprises a signal transceiver circuit delay and/or a radio frequency transmission delay.

13. The method according to any one of claims 1 to 12, wherein the first angle information comprises azimuth information and/or downtilt information of a directional anchor.

14. A positioning method, wherein the method comprises:
receiving first information, wherein the first information corresponds to at least one first anchor comprised in a first anchor set, and the first information comprises one or more of the following information: first location information, first delay information, or first angle information; and
the first anchor set is related to a first access network device, and the first anchor is one of the following anchors: the first access network device, a mirror image of the first access network device, an antenna of the first access network device, a mirror image of the antenna of the first access network device, a remote radio head of the first access network device, a mirror image of the remote radio head of the first access network device, a radio signal scatterer in a radio signal propagation process of the first access network device, or a mirror image of the radio signal scatterer; and
obtaining positioning information based on the first information.

15. The method according to claim 14, wherein the obtaining the positioning information based on the first information comprises:
obtaining the positioning information based on the first information that corresponds to the at least one first anchor and third information, wherein the third information comprises second channel information and/or second multipath measurement information, the second channel information is information about a radio channel between a first terminal and the first access network device, and the second multipath measurement information is multipath measurement information of the radio channel between the first terminal and the first access network device.

16. The method according to claim 15, wherein the second multipath measurement information is multipath measurement information obtained by inputting the second channel information into a multipath measurement information extraction algorithm.

17. The method according to claim 16, wherein the method further comprises: receiving information about the multipath measurement information extraction algorithm.

18. The method according to any one of claims 14 to 17, wherein the third information further comprises internal sensor information of the first terminal.

19. The method according to any one of claims 14 to 18, wherein the information about the radio channel comprises one or more of the following information: a channel impulse response CIR, channel state information CSI, a power delay profile PDP, or a delay profile DP.

20. The method according to any one of claims 14 to 19, wherein the second multipath measurement information comprises a time difference of arrival TDOA of at least two of a plurality of paths of the radio channel between the first terminal and the first access network device and/or one or more of the following measurement information of at least one path of the radio channel between the first terminal and the first access network device: received signal strength RSS, a path loss path loss, time of arrival TOA, time of flight TOF, an angle of arrival AoA, an angle of departure AoD, round trip time RTT, phase information, or phase difference information.

21. The method according to any one of claims 14 to 20, wherein the first delay information comprises a signal transceiver circuit delay and/or a radio frequency transmission delay.

22. The method according to any one of claims 14 to 21, wherein the first angle information comprises azimuth information and/or downtilt information of a directional anchor.

23. A communication apparatus, wherein the communication apparatus comprises a module or a unit configured to perform the method according to any one of claims 1 to 13, or the communication apparatus comprises a module or a unit configured to perform the method according to any one of claims 14 to 22.

24. A communication apparatus, comprising a processor coupled to a memory, wherein the processor is configured to execute a computer program or instructions stored in the memory, to implement the method according to any one of claims 1 to 13, or implement the method according to any one of claims 14 to 22.

25. The apparatus according to claim 24, wherein the apparatus further comprises the memory and/or a transceiver, and the transceiver is configured to send and receive data and/or signaling.

26. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor performs the method according to any one of claims 1 to 13 through a logic circuit or by executing instructions, or the processor performs the method according to any one of claims 14 to 22 through a logic circuit or by executing instructions.

27. A computer-readable storage medium, wherein the storage medium stores a computer program or instructions, and when the computer program or the instructions are executed by a communication apparatus, the method according to any one of claims 1 to 13 is performed, or the method according to any one of claims 14 to 22 is performed.
